(19) Europäisches Patentamt
European Patent Office
Office européen des brevets

(11) **EP 1 803 553 B1**

(12) **EUROPEAN PATENT SPECIFICATION**

(45) Date of publication and mention of the grant of the patent:
**01.08.2012 Bulletin 2012/31**

(21) Application number: **05795899.3**

(22) Date of filing: **21.10.2005**

(51) Int Cl.:
*B32B 27/30* (2006.01)    *B29C 45/14* (2006.01)

(86) International application number:
**PCT/JP2005/019416**

(87) International publication number:
**WO 2006/043672 (27.04.2006 Gazette 2006/17)**

(54) **MATT ACRYLIC RESIN FILM PRODUCT FOR THERMOFORMING, PROCESS FOR PRODUCING THE SAME, AND LAMINATED PRODUCT COMPRISING THE SAME**

MATTES ACRYLHARZFILMPRODUKT ZUM THERMOFORMEN, VERFAHREN ZU DESSEN HERSTELLUNG UND DAS PRODUKT UMFASSENDE LAMINATE

PRODUIT DE FILM DE RÉSINE ACRYLIQUE MAT POUR THERMOFORMAGE, PROCÉDÉ DE FABRICATION IDOINE, ET STRATIFIÉS CONTENANT LE PRODUIT

(84) Designated Contracting States:
**DE FR GB**

(30) Priority: **22.10.2004 JP 2004308361**
**26.04.2005 JP 2005127966**

(43) Date of publication of application:
**04.07.2007 Bulletin 2007/27**

(73) Proprietor: **MITSUBISHI RAYON CO., LTD.**
**Tokyo 108-8506 (JP)**

(72) Inventors:
• **KITAIKE, Yukio,Mitsubishi Rayon Co., Ltd.**
**Toyohashi-shi, Aichi 4408601 (JP)**
• **ABE, Yoshinori,Mitsubishi Rayon Co., Ltd.**
**Hiroshima 739-0693 (JP)**

(74) Representative: **ter Meer, Nicolaus**
**TER MEER STEINMEISTER & PARTNER GbR**
**Patentanwälte**
**Mauerkircherstraße 45**
**81679 München (DE)**

(56) References cited:
WO-A2-01/04217      JP-A- 9 274 218
JP-A- 11 131 689     JP-A- 2003 211 598

• DATABASE WPI Week 200414 Thomson Scientific, London, GB; AN 2004-136787 XP002576618 & JP 2003 211598 A (SUMITOMO CHEM CO LTD) 29 July 2003 (2003-07-29)
• DATABASE WPI Week 199801 Thomson Scientific, London, GB; AN 1998-005593 XP002576619 & JP 09 274218 A (DAINIPPON PRINTING CO LTD) 21 October 1997 (1997-10-21)
• DATABASE WPI Week 199930 Thomson Scientific, London, GB; AN 1999-353654 XP002576620 & JP 11 131689 A (DAU KAKO KK) 18 May 1999 (1999-05-18)
• DATABASE WPI Week 200549 Thomson Scientific, London, GB; AN 2005-481597 XP002576621 & JP 2005 163003 A (MITSUBISHI RAYON CO LTD) 23 June 2005 (2005-06-23)

Remarks:
The file contains technical information submitted after the application was filed and not included in this specification

**Description**

TECHNICAL BACKGROUND

The present invention relates to a matte acrylic resin film for thermoforming, a method for producing the same, and a laminated product comprising the same.

BACKGROUND ART

Insert molding or in-mold decorating is a method for giving design characteristics to a molded article at low cost. The insert molding is a method in which a film or sheet made from polyester resin, polycarbonate resin, acrylic resin or the like which has already been decorated by printing and the like is molded in a three dimensional shape by vacuum molding and the like, the unnecessary portion of the film or sheet in the shape being removed, and transferred into a mold for injection molding to obtain an integrated molded article with a substrate resin by injection molding of the substrate resin. While, the in-mold decorating is a method in which a film or sheet made from polyester resin, polycarbonate resin, acrylic resin or the like which has already been decorated by printing and the like is set in a mold for injection molding and, after subjected to vacuum molding, subjected to injection molding in the same mold to obtain an integrated molded article with a substrate resin by injection molding of the substrate resin.

An acrylic resin film having a rubber-containing polymer of a specific composition and a thermoplastic polymer of a specific composition in a specific ratio and an acrylic resin film having a rubber-containing polymer of a specific composition, a thermoplastic polymer of a specific composition, and a matting agent in a specific ratio have been disclosed (for example, refer to Patent Document 1). These acrylic resin films have a function as an alternative material for a matte painting as well as giving decorating properties to a molded article. Further, a matted acrylic resin film, which is capable of maintaining an excellent matte performance after molding, consisting of a matte layer composed of a thermosetting or photo-curable resin and inorganic fine particles, and an acrylic resin film base, has been disclosed (for example, refer to Patent Document 2). Further, an acrylic insert film in which a matte layer is formed on one side of a transparent acrylic film and at least a design layer is formed on the other side of the transparent acrylic film has been disclosed (for example, refer to Patent Document 3). Furthermore, a suede-like molding sheet having a specific matte paint-coated film on a substrate film with excellent moldability has been disclosed (for example, refer to Patent Document 4).

Nowadays, materials having matte acrylic resin film product layer on their surface, which are molded by insert molding or in-mold decorating, are used as parts for vehicles.

Acrylic resin films which have specific film-surface gloss and excellent printability, and which are excellent in flatting, surface hardness, heat resistance, and moldability have been obtained (for example, refer to Patent Document 1). However, these acrylic resin films have been restricted by kinds of matting agents to be used because matting agents are mixed with base acrylic resins and kneaded. Concretely, when organic fine particles having a crosslinked structure in which a component other than acrylic resin is a main component or inorganic fine particles are used as matting agents, the haze values of the matte acrylic resin films are increased, though the films are in matte states. When a countermeasure such as forming a decorated layer on one side of the matte acrylic resin film and contacting the decorated layer to the substrate is provided, the decoration of the molded article is observed to be turbid. Consequently, the industrial utilization value has been low. Further, when organic fine particles having a crosslinked structure or inorganic fine particles are used as the matting agent, there is a problem in that handling of the film at the film forming step becomes difficult or the film is cracked or torn under a severe condition such as deep drawing at the time of in-mold decorating or insert molding, depending on the amount of the matting agent to be added because the matte acrylic resin film becomes brittle.

On the other hand, acrylic resin films which can maintain excellent flatting after molding have been obtained (for example, refer to Patent Document 2). In this Patent Document, a thermosetting or photo-curable resin including inorganic fine particles is formed on the acrylic resin film as a matte layer. However, when a matte film using a thermosetting resin is used for a matte layer, there is a case that the matte layer is cracked when the film is stretched at the time of vacuum molding of in-mold decorating or insert molding. Therefore, it is important to properly set the thickness of the matte layer or the composition of the hardening resin to be used, however in the case of the matte acrylic resin film disclosed in the example of the Patent Document, there is a restriction in the molding condition of the film because the matte layer is easily cracked. Further, when the film is used in interior of vehicles, anti-scratch property is required. There has been a case that a character of the acrylic resin film for use in interior of vehicles has appeared as if it were polished when used for a long time because the surface of the film has been abraded with time, though the properties of the acrylic resin film have reached to constant level. There are many cases where wax is used to improve the anti-scratch property, however, there is no description concerning the optimum wax in the Patent Document. Further, there has been a case that a matte appearance has changed by the heat at the time of molding in the case of a matte acrylic resin film obtained by a printing method or a coating method. Further, there is a case that color of a film turns yellow depending on the heating condition of the film in the case of carrying out insert molding or in-mold decorating by using an acrylic resin film having a matte layer composed of a thermosetting resin. However, there is no description concerning a concrete method for obtaining the acrylic resin film which has a small yellowing factor. Further, there is a case that an insert molding is carried out by using a laminated film composed of an acrylic resin film and a substrate sheet. In this case, the acrylic resin film tends to separate from the substrate sheet at the time of the insert molding if the heat shrinkage factor of the acrylic resin film is large. There is no concrete description concerning the heat shrinkage factor of the acrylic resin film in the Patent Document. Further, in the case of producing a matte acrylic resin film by using a printing method or a coating method, it is important to properly set the solvent composition of the coating liquid to be used or the amount of coating of the coating liquid at the time of the coating on the film because the physical properties of the acrylic resin film as a substrate are lowered owing to the attack of the solvent. However, there is no description concerning the optimum coating condition in the Patent Document.

Further, a matte acrylic insert film in which a matte layer is formed on one side of a transparent acrylic film and at least a design layer is formed on the other side of the acrylic film has been obtained (for example, refer to Patent Document 3). In this Patent Document, a matte acrylic film composed of spherical fine particles of fluorocarbon resin and acrylic resin is disclosed as a matte layer, however, there is no disclosure of the measures for improving moldability in the case of using a hardening resin for the matte layer. Further, there are many cases where wax is used to improve the anti-scratch property, there is no concrete description concerning the wax. It may be considered that the spherical fine particles of fluorocarbon resin also play a role of the wax, however in this case, there is a possibility to cause the problem in productivity. Further, there is no concrete description of the hardening resin which is used as a binder resin. In the embodiment, a thermoplastic resin is used, which is deficient in chemical resistance. Further, there has been a case that a matte appearance has changed by the heat at the time of molding in the case of the matte acrylic resin film obtained by a printing method or a coating method. Further, there is a case that the color of a film turns yellow depending on the heating condition of the film in the case of carrying out insert molding or in-mold decorating by using an acrylic resin film having a matte layer composed of a thermosetting resin. However, there is no description concerning a concrete method for obtaining the acrylic resin film which has a small yellowing.

Further, a suede-like molding sheet in which a coated film composed of a beads pigment having a specific particle diameter and an ionizing radiation curable resin is formed on a substrate film with excellent moldability has been obtained (for example, refer to Patent Document 4). In this Patent Document, the ionizing radiation curable resin is used as a binder resin. When the sheet is molded into deep draws at the time of in-mold decorating or insert molding, there is a possibility that defects in molding such as cracking and breaking may occur caused by the fact that the curable resin layer does not stretch sufficiently because the respective moldabilities of the ionizing radiation curable resin and the substrate film are different. However, there is no description concerning the optimum thickness of the matte layer to solve this problem. Mixing thermoplastic resins to improve the moldability is disclosed, however, there is a problem of lowering the chemical resistance in this method. Further, there has been a case that a matte appearance has changed by the heat at the time of molding in the case of the matte film obtained by a printing method or a coating method. There is no disclosure of the measure for solving these problems. Further, there is no description concerning a proper acrylic resin film for the substrate.

Patent Document 1: Japanese Patent Application Laid-Open No. 2002-361,712
Patent Document 2: Japanese Patent Application Laid-Open No. 2003-211,598
Patent Document 3: Japanese Patent Application Laid-Open No. Hei10-34,703
Patent Document 4: Japanese Patent No. 2,132,254

DISCLOSURE OF INVENTION

PROBLEM TO BE SOLVED BY THE INVENTION

It is one of the objects of the present invention to provide a matte acrylic resin film for thermoforming, which can realize design characteristics that is difficult to be realized in the conventional case where a matting agent is added to an acrylic resin film layer and can obtain excellent handleability and the matte layer of which does not generate cracks even in the formation of deep draws by insert molding or in-mold decorating. Further, the present invention can be used for vehicles and it is also one of the objects of the present invention to provide a matte acrylic resin film for thermoforming which has anti-scratch property, surface hardness, heat resistance, chemical resistance, resistance to yellowing by heat, and flatting. Further, it is also one of the objects of the present invention to provide an optimum method of production to obtain the matte acrylic resin film for thermoforming, and furthermore, it is also one of the objects of the present invention to provide a laminated product formed by laminating the film on a substrate.

MEANS FOR SOLVING THE PROBLEM

The objects of the present invention can be solved by the present invention described in the following.

(1) A matte acrylic resin film for thermoforming, comprising:

an acrylic resin film base; and
a matte layer of 0.1 $\mu$m or more and less than 2 $\mu$m thickness containing a matting agent and a curable binder resin, the matte layer being formed on one surface of the acrylic resin film base as the outermost layer.

(2) The matte acrylic resin film for thermoforming of the foregoing (1), the matte layer further containing a polyolefin wax.
(3) The matte acrylic resin film for thermoforming of the foregoing (1), further comprising a design layer on the opposite side of the matte layer of the acrylic resin film base.
(4) A method for producing a matte acrylic resin film for thermoforming, comprising the step of forming a matte layer of 0.1 $\mu$m or more and less than 2 $\mu$m thickness containing a matting agent and a curable binder resin on an acrylic resin film base by printing method or coating method.
(5) The method for producing a matte acrylic resin film for thermoforming of the foregoing (4), wherein the matte layer is formed by using an oblique line roll having oblique lines engraved with the interval of 150 lines or more per 25.4 mm the angle of 40 to 50 degrees to the roll axis direction.
(6) A laminated product, comprising the matte acrylic resin film for thermoforming of the foregoing (1) and a substrate, the substrate being in contact with the surface of the matte acrylic resin film for thermoforming on the opposite side of the matte layer.
(7) The laminated product of the foregoing (6), wherein dynamic coefficient of friction of the matte layer is 0.23 or less.
(8) The laminated product of the foregoing (6), wherein the matte acrylic resin film for thermoforming is laminated on the substrate by using in-mold decorating or insert molding.

EFFECT OF THE INVENTION

The present invention resides in a matte acrylic resin film for thermoforming, in which a matte layer of 0.1 $\mu$m or more and less than 2 $\mu$m thickness containing at least a matting agent and a binder resin is formed on one surface of an acrylic resin film base. Consequently, the matte acrylic resin film can obtain design characteristics that is difficult to be realized in the conventional case where a matting agent is added to an acrylic resin film layer and can obtain excellent handleability, the matte layer of which does not generate cracks even in the formation of deep draws by insert molding or in-mold decorating, and which has anti-scratch property, surface hardness, heat resistance, chemical resistance, resistance to yellowing by heat, and flatting, and can be used for vehicles. Further, the present invention also provides a laminated product formed by laminating the matte acrylic resin film on a substrate, and furthermore, it is possible to stably produce the matte acrylic resin film by adopting the producing method of the present invention.

BEST MODE FOR CARRYING OUT THE INVENTION

<Acrylic resin film base>

As an acrylic resin film base to be used in the present invention, publicly known acrylic resin films can be used. As those with anti-scratch property, pencil hardness, heat resistance, and chemical resistance, which can be used for vehicles, those disclosed in, for example, Japanese Patent Application Laid-Open No. Hei8-323,934, Japanese Patent Application Laid-Open No. Hei 11-147,237, Japanese Patent Application Laid-Open No. 2002-80,678, Japanese Patent Application Laid-Open No. 2002-80,679, and Japanese Patent Application Laid-Open No. 2005-97,351 are preferable. Further, when resistance to whitening by molding is considered as important in the case of carrying out insert molding or in-mold decorating, those disclosed in Japanese Patent Application Laid-Open No. 2005-163,003 and Japanese Patent Application Laid-Open No. 2005-139,416 are preferable.

(Heat shrinkage factor)

It is preferable that the acrylic resin film base is the one that is not as shrinkable as possible when it is heated. When an insert molding is carried out by laminating a matte acrylic resin film for thermoforming onto a substrate sheet made from ABS resin, there is a case that the matte acrylic resin film is separated from the substrate sheet if the heat shrinkage factor of the acrylic resin film base is large.

As the acrylic resin film base, one that has the heat shrinkage factor of 50% or less in the machine direction and the heat shrinkage factor of -10 to 10% in the transverse direction at the time of the heat treatment for 60 minutes under the atmosphere of 130°C is preferable. Such a acrylic resin film base shows excellent adhesion properties between the matte layer and the acrylic resin film base when they are formed into a laminated product in the case of carrying out insert molding or in-mold decorating, and shows a high industrial utilization value. Concretely, in the case of laminates for vehicles, the laminates which do not separate at the interface of the matte layer and the acrylic resin film base can be obtained when the evaluation of the adhesion properties between the matte acrylic resin film and the substrate of the laminates is carried out. Further, when a laminate sheet in which the matte acrylic resin film is laminated on the substrate sheet is used as the design film or sheet, it is preferable that the heat shrinkage factor of the acrylic resin film base is small from the viewpoint of suppressing the separation at the interface of the substrate sheet and the acrylic resin film base at the time of heating in the case of carrying out insert molding or in-mold decorating. The heat shrinkage factor in the machine direction of the acrylic resin film base is preferably 30% or less, more preferably 15% or less. Further, it is preferably 0% or more. The heat shrinkage factor in the transverse direction of the acrylic resin film base is preferably 0 to 5%.

The measurement of the heat shrinkage factor is carried out by the following procedure. First, three parallel straight lines are drawn in machine direction (the direction of flow at the time of forming film) and transverse direction (the direction perpendicular to machine direction) with a space of 5 cm between the lines on the surface of the acrylic resin film base cut out in A4 size, and the space is precisely measured with a pair of calipers. The measurement of the space is carried out at two points and the points are marked. Subsequently, the resultant acrylic resin film base is left alone for 60 minutes under the atmosphere of 130°C, and then taken out, and the spaces of the same points where the previous measurements were carried out are measured again. The heat shrinkage factor rate is calculated according to the following formula using the average value of the spaces of the two points. Heat shrinkage factor (%) = ((the space before heating - the space after heating) / the space before heating) x 100.

To specify machine direction and transverse direction of the film in which these directions are unknown, for example, the following procedure is carried out. A circle with a specific radius is drawn on the film, and the heat treatment of the above-mentioned condition is carried out. A direction with the largest heat shrinkage factor is determined from the shape of the circle (ellipse in the case where there is anisotropy) on the resultant film and the direction is determined as machine direction, while a direction perpendicular to it is determined as transverse direction.

(Pencil hardness)

The pencil hardness of the acrylic resin film base (measurement based on JIS K5600) is preferably 2B or harder, more preferably HB or harder, and particularly preferably F or harder, to improve the pencil hardness of the matte acrylic resin film of the present invention.

(Production method of acrylic resin film base)

As the method for producing the acrylic resin film base, publicly known methods such as melt extrusion method which includes casting method, T-dye method and inflation method, and calendering method can be listed. Among these, the T-dye method is preferable from the industrial point of view. When the acrylic resin film base is molded by the T-dye method, it is preferable to use the method in which the acrylic resin film base is held between a plurality of rolls or belts selected from a metal roll, a nonmetal roll, and a metal belt, and formed into film. According to this method, surface flatness of the resultant matte acrylic resin film is improved and a coating failure at the time of forming matte layer on the acrylic resin film base and a blank printing failure at the time of printing on the matte acrylic resin film can be suppressed. As the metal roll, a metal specular touch roll; a roll to be used in a sleeve touch manner consisting of a metal sleeve (a metal thin film pipe) and a molding roll, which is described in Japanese Patent No. 2,808,251 or International Publication Pamphlet No. 97/28,950 and the like can be listed. As the nonmetal roll, a touch roll made from silicon rubber and the like can be listed. As the metal belt, a metal endless belt and the like can be listed. These metal roll, nonmetal roll and metal belt may be used in combination. In the method in which the acrylic resin film base is held between a plurality of rolls or belts selected from a metal roll, a nonmetal roll, and a metal belt, and formed into film, it is preferable that the raw material obtained right after a melt extrusion is held in a state where there is substantially no bank (a resin pool) and formed into film by facial transfer without substantial rolling. When the film is formed without forming a bank (a resin pool), the heat shrinkage factor of the acrylic resin film base formed into film in this method is reduced because the raw material under cooling process is subjected to facial transfer without substantial rolling. Further, when the melt extrusion method is carried out by using T-dye method and the like, it is also preferable to carry out the extrusion while filtering a raw acrylic resin in molten state with a screen mesh of 200 mesh or more.

The thickness of the acrylic resin film base is preferably 10 to 500 μm. A molded film can be formed more stably by adjusting the thickness of the acrylic resin film base to 500 μm or less because rigidity of the acrylic resin film base suitable for insert molding or in-mold decorating can be obtained. Further, it is possible to give more adequately a resultant laminated product depth in appearance as well as substrate protection ability by adjusting the thickness of the acrylic resin film base to 10 $\mu$m or more. The thickness of the acrylic resin film base is more preferably 30 $\mu$m or more, particularly preferably 50 $\mu$m or more. Further, the thickness of the acrylic resin film base is more preferably 300 $\mu$m or less, particularly preferably 200 $\mu$m or less.

< Matte layer>

It is necessary that the thickness of the matte layer formed on one surface of the acrylic resin film base is 0.1 $\mu$m or more and less than 2 $\mu$m. When the thickness of the matte layer is 0.1 $\mu$m or more, surface physical properties such as anti-scratch property and the like in the case that the matte layer is used as the component of a laminated product can be realized. The thickness of the matte layer is more preferably 0.5 $\mu$m or more, particularly preferably 0.8 $\mu$m or more. When the thickness of the matte layer is 5 $\mu$m or less, generation of cracks in the matte layer can be reduced even in the case of the formation of deep draws by insert molding or in-mold decorating. The thickness of the matte layer is less than 2 $\mu$m. Further, it is possible to reduce lowering of the physical properties of the acrylic resin film base caused by a solvent because the amount of coating per unit area at the time of coating is reduced. Further, excellent flatting is realized by adjusting the thickness of the matte layer to 2 $\mu$m or less. The amount of a matting agent per unit volume can be reduced because the excellent flatting is realized by making the thickness of the matte layer thin, which results in reducing the lowering of physical properties of the matte layer. Further, excellent anti-scratch property is realized by adjusting the thickness of the matte layer thin because an addition effect of wax is improved. The thickness of the matte layer is determined by observing a cross section of the film with a transmission electron microscope, measuring the thickness of the matte layer at 5 points of the cross section, and averaging these values. In the case that the thickness of the matte layer is smaller than mass average particle diameter of the matting agent, the thickness is measured by observing a portion where the matting agent does not exist, that is a portion which consists only of a binder resin.

(Matting agent)

As a matting agent, it is preferable to use organic or inorganic particles having the mass average particle diameter of 0.5 to 50 $\mu$m. The mass average particle diameter is preferably 2 $\mu$m or more from the viewpoint of flatting and appearance. When the mass average particle diameter is 2 $\mu$m or more, it is not only that the flatting becomes better but also that the appearance of the resultant matte layer becomes similar to a planed aluminum and rich in an impression of superior quality in the case that the matte layer is combined with a design of a metallic tone because reflection of the light of a fluorescent lamp is reduced. Further, the mass average particle diameter is preferably 30 $\mu$m or less, particularly preferably 10 $\mu$m or less from the viewpoint of moldability, appearance, and falling off of the matting agent from a binder resin at the time of forming the matte layer. When the mass average particle diameter is 10 $\mu$m or less, moldability of the matte layer becomes better, and moreover, the appearance of the resultant matte layer becomes similar to a planed aluminum and becomes rich in an impression of superior quality in the case that the matte layer is combined with a design of a metallic tone because reflection of the light of a fluorescent lamp is slightly seen and this means a high industrial utilization value. Further, in the case that the matte acrylic resin film is obtained by gravure coating, gravure reverse coating or the like, the mass average particle diameter is preferably 30 $\mu$m or less, particularly preferably 10 $\mu$m or less from the viewpoint of reducing doctor streak. Further, the matting agent preferably does not contain coarse particles of 20 $\mu$m or more from the viewpoint of an occurrence of coating failure at the time of coating and an occurrence of doctor streak.

As the quality of the material for the organic particles, those publicly known can be used. For example, silicone resin, styrene resin, styrene-acrylic resin, acrylic resin, fluorocarbon resin, benzoguanamine-formaldehyde condensate, benzoguanamine-melamine-formaldehyde condensate, and melamine-formaldehyde condensate can be listed. As the material of the organic particles, it is preferable to select those having the refractive index as close to that of the binder resin as possible when the design is needed to be clear from the viewpoint of an impression of design at the time of forming the design layer. For example, beads comprising crosslinked polymethyl methacrylate (crosslinked PMMA) is preferably selected as the matting agent, when an acrylic resin is used as the binder resin. Further, contrary to this, it is possible to select the matting agent according to a kind of the design because it is possible to use the matting agent having the refractive index a little different from that of the binder resin to be able to give the matte layer an impression of whiteness.

As the material for the inorganic particles, those publicly known can be used. For example, mica, talc, silica, calcium carbonate, titanium oxide, and iron oxide can be listed. Further, inorganic particles which are subjected to surface treatment with acrylic resin, polyurethane resin, or surfactant can also be used, however, the material for the surface treatment has to be selected from the viewpoint of yellowing at the time of heat treatment. It is preferable to use inorganic particles which are not subjected to surface treatment from the view point of yellowing at the time of heat treatment. Among these materials, silica is particularly preferable from the viewpoint of appearance and physical properties and the like of the matte acrylic resin film obtained. As the silica, those publicly known and on sale can be used. For example, Mizukasil manufactured by Mizusawa Industrial Chemicals, Ltd., Sylysia manufactured by Fuji Silysia Chemical Ltd. or the like can be listed. When the inorganic particles are used as the matting agent, it is possible to improve design characteristics depending on a kind of the design because they can give the matte acrylic resin film peculiar impression of whiteness, so that they have a high industrial utilization value. However, when the matting agent of inorganic particles are kneaded in an acrylic resin film base to obtain a matte film, design characteristics is spoiled at the time of forming a design layer because the film itself considerably whiten.

The amount of addition of the matting agent is preferably 1 to 40 parts by mass to 100 parts by mass of the binder resin. The amount of addition of the matting agent is preferably 5 parts by mass or more, particularly preferably 10 parts by mass or more from the viewpoint of flatting. The amount of addition of the matting agent is preferably 30 parts by mass or less, particularly preferably 20 parts by mass or less from the viewpoint of in-mold moldability or insert moldability or from the viewpoint of reducing doctor streaks in the case of forming the matte acrylic resin film by gravure coating, gravure reverse coating, kiss reverse coating, micro gravure coating or the like.

(Wax)

As the wax, publicly known natural wax such as carnauba wax, haze wax, montan wax, paraffin wax, and the like, publicly known synthesized wax such as an aliphatic amide, polyethylene, polypropylene, polytetrafluoroethylene, and the like, publicly known silicone wax such as alkyl modified silicone oil, polyether modified silicone oil, and the like, and block copolymers including silicone or fluorine component can be listed. In the present invention, it is preferable to use polyolefin wax such as polyethylene, polypropylene, a composite material of polyethylene and polypropylene, and the like.

The wax having the melting point of 120˚C or more is preferable, and the wax having the melting point of 140˚C or more is more preferable from the viewpoint of mold fouling at the time of in-mold decorating or insert molding because bleeding of the wax by the heat at the time of molding is harder to occur as the melting point of the wax becomes higher. With respect to the block copolymers including silicone or fluorine component, it is possible to realize excellent bleed resistance even at the melting point of 100˚C or less by selecting the other copolymer component.

As the wax having these melting points, polyethylene, polypropylene, a composite material of polyethylene and polypropylene, polytetrafluoroethylene, and the like are listed. The composite material of polyethylene and polypropylene is more preferable and polytetrafluoroethylene is particularly preferable from the viewpoint of the melting point. Polytetrafluoroethylene is more preferable and polyethylene, polypropylene, and a composite material of polyethylene and polypropylene are particularly preferable from the viewpoint of anti-scratch property. Further, it is possible to realize more excellent anti-scratch property by using these materials in combination, and the combination of polyethylene and polytetrafluoroethylene is particularly preferable.

On the other hand, the wax having a small specific gravity is preferable from the viewpoint of sedimentation properties of the wax at the time of coating. For example, a material having a specific gravity of 2 or more such as polytetrafluoroethylene is easy to settle though it depends on a viscosity of a coating liquid at the time of coating. When the wax settles at the time of coating, the anti-scratch property lowers because of the decrease in the amount of the wax contained in the matte layer, and moreover, a white streak generated from rolling up of the settled wax with a printing plate roll is transfered on the matte acrylic resin film as a defect. From the above, it is preferable to use polyolefin wax such as polyethylene, polypropylene, a composite material of polyethylene and polypropylene, or the like in the present invention. Although the wax such as polyethylene, polypropylene, or a composite material of polyethylene and polypropylene is usually used in the state of ultra fine powder obtained by dry grinding, it is preferable to use the wax having the mass average particle diameter which is larger than the thickness of the matte layer in the present invention. It is more preferable to use the wax having the mass average particle average diameter which is larger than two times the thickness of the matte layer from the viewpoint of anti-scratch property. Further, the wax which does not contain coarse particles of 20 μm or more is preferably used from the viewpoint of an occurrence of coating failure at the time of coating and an occurrence of doctor streak.

The amount of addition of the wax is preferably 1 to 20 parts by mass to 100 parts by mass of the binder resin. The amount of addition of the wax is more preferably 3 parts by mass or more, particularly preferably 5 parts by mass or more from the viewpoint of anti-scratch property. The amount of addition of the wax is preferably 20 parts by mass or less from the viewpoint of anti-scratch property.

(Curable binder resin)

As the curable binder resin, it is preferable to use publicly known thermosetting resins and photo-curable resins from the viewpoint of anti-scratch property, chemical resistance, and heat resistance. For example, acrylic resins, polyurethane-acrylate resins, silicone acrylate resins, epoxy resins, and ester resins can be used. Among them, polyurethane-acrylate resins are preferable in view of physical properties. As the polyurethane-acrylate resins, those publicly known can be used. In particular, a polyurethane-acrylate thermosetting resin which contains a hydroxyl group-containing acrylic resin having alkyl methacrylate unit as a main component, the hydroxyl value of 20 to 120 mgKOH/g, and the glass transition temperature of 50 to 110˚C, and polyisocyanate is preferable.

The hydroxyl value of the hydroxyl group-containing acrylic resin is preferably 20 mgKOH/g or more, more preferably 50 mgKOH/g or more from the viewpoint of pencil hardness and anti-scratch property. The hydroxyl value of the hydroxyl group-containing acrylic resin is preferably 120 mgKOH/g or less, more preferably 100 mgKOH/g or less from the viewpoint of chemical resistance, adhesion properties, and cracking of the matte layer at the time of molding. The glass transition temperature of the hydroxyl group-containing acrylic resin is preferably 50˚C or more, more preferably 60˚C or more from the viewpoint of heat resistance, film blocking property, pencil hardness, and anti-scratch property.

As the polyisocyanate (curing agent), those publicly known can be used. In particular, those having less yellowing at the time of heat treatment such as isocyanurate type polyisocyanate which is composed of hexamethylenediisocyanate, dicyclohexylmethanediisocyanate, isophoronediisocyanate, 2,2,4-trimethylhexamethylenediisocyanate, lysinediisocyanate, and the like, adduct type polyisocyanate with trimethylolpropane, and biuret type polyisocyanate are preferable. Further, hexamethylenediisocyanate, dicyclohexylmethanediisocyanate, isophoronediisocyanate, 2,2,4-trimethylhexamethylenediisocyanate, and lysinediisocyanate can be used alone.

The polyisocyanate is preferably used in such an amount of addition that the molar amount of isocyanate group is in the range of 0.5 to 1.5 times as much as the molar amount of hydroxyl group in the hydroxyl group-containing acrylic resin. When the amount of addition is 0.5 times or more, curing proceeds sufficiently to obtain excellent pencil hardness, anti-scratch property, and chemical resistance because the amount of the isocyanate group becomes sufficient to the hydroxyl group. When the amount of addition is 1.5 times or less, sufficient pencil hardness, anti-scratch property, and chemical resistance can be realized, cracking of the matte layer at the time of molding becomes hard to occur, and the problem such as film blocking caused by excess polyisocyanate becomes hard to occur. When a thermoplastic resin is used as a binder resin, chemical resistance tends to decrease, though moldability is excellent. When the products are used in interior of vehicles, there are some cases that failures in appearance as if the products were polished occur in the case that some components of aromatic substances adhere to them and then the matte layer dissolves.

<Matte acrylic resin film>

The matte acrylic resin film of the present invention is the one in which a matte layer of 0.1 μm or more and less than 2 μm thickness including a matting agent and a curable binder resin is formed on an acrylic resin film base.

(Method of forming matte layer)

It is preferable to use printing method or coating method to form the matte layer. In this case, the matte layer is formed by preparing a paint by dissolving or dispersing a raw material which is to constitute the matte layer in a solvent, coating the paint on one surface of the acrylic resin film base, and heating and drying the resultant acrylic resin film base to remove the solvent. This method is preferable because adhesion properties between the matte layer and the acrylic resin film base becomes excellent. As the printing method, publicly known methods such as gravure printing, screen printing, offset printing, and the like can be listed. As the coating method, publicly known methods such as flow coating method, spray coating method, bar coating method, gravure coating method, gravure reverse coating method, kiss reverse coating method, micro gravure coating method, roll coating method, blade coating method, rod coating method, roll doctor coating method, air knife coating method, comma roll coating method, reverse roll coating method, transfer roll coating method, kiss-roll coating method, curtain coating method, dipping coating method, and the like can be listed. Among them, gravure coating method and gravure reverse coating method are preferable because these methods are hard to be affected by a rolled shape of the acrylic resin film base. According to the gravure coating method and gravure reverse coating method, coating failures and the like caused by spots made at the time of rolling of a film are hard to occur.

As the gravure roll to be used in gravure coating method, those publicly known can be used. In particular, it is preferable to use an oblique line roll having 150 lines or more per 25.4 mm from the viewpoint of reducing the influence of engraved pattern of the gravure roll. When the engraved pattern is formed on the matte acrylic resin film, its industrial utilization value is lowered because its design characteristics is damaged. Further, when the gravure roll having an oblique line-engraved pattern is used, the engraved pattern is reduced comparing with the case that the gravure roll having a latticed engraved pattern is used and hence it is preferable. Further, when the gravure roll having an oblique line-engraved pattern is used, a matte appearance of a molded article in the case of thermoforming such as in-mold decorating or insert molding is similar to the appearance of the original matte film. Concretely, a molded article can be obtained without damaging the design characteristics at the stage of a matte acrylic resin film or a laminated sheet with a decorated layer because reflection of the light of a fluorescent lamp of the molded article is similar to those of the matte film, and this means a high industrial utilization value. For example, even in the case of using the latticed gravure roll, when the latticed gravure roll having small gaps between engraved patterns is used, a very excellent appearance can be obtained at the stage of a matte acrylic resin film, however, an appearance of a molded article obtained by thermoforming such as in-mold decorating or insert molding is different from that of the matte acrylic resin film. Further, it is preferable for the roll to have oblique lines engraved at an angle of 40 to 50 degrees to the axis direction of the roll. It is possible to obtain acrylic resin film having a homogeneous matte coated surface without any coating spots by using such a oblique line roll. As the material for the gravure roll, those publicly known such as copper on which hard chrome is plated and those made of ceramics can be used, and those made of ceramics are preferable from the viewpoint of durability. Further, as doctor blades to be used in gravure coating, those publicly known such as those made of steel, those made of stainless steel, those made of ceramics and the like can be used, and those made of stainless steel are preferably used from the viewpoint of doctor streaks. Or it is also preferable to use a doctor blade which is improved in slip property by coating a material composed of ceramics and lubricants on a doctor blade made of stainless steel. Further, doctor blades made of plastics can also be used.

When a paint is coated on the acrylic resin film base, the amount of a solvent contained in the paint is preferably 30 g or less per 1 $m^2$ of the acrylic resin film base, more preferably 20 g or less, and particularly preferably 10 g or less from the viewpoint of lightening the degradation of the physical properties of the acrylic resin film by solvent. Further, the amount of the paint to be coated has to be the amount equivalent to the thickness of the matte layer of 0.1 $\mu$m or more and less than 2 $\mu$m when dried. When the amount of the paint to be coated is the amount equivalent to the thickness of the matte layer of 0.1 $\mu$m or more, it is possible to realize surface physical properties in the case that the paint is constituted in a laminated product. It is preferably 0.5 $\mu$m or more, more preferably 0.8 $\mu$m or more. When the amount of the paint to be coated is the amount equivalent to the thickness of the matte layer of 5 $\mu$m or less, it is possible to reduce the degradation of physical properties of the acrylic resin film base caused by the solvent because the amount of the paint to be used per unit area at the time of coating is decreased. The thickness of the matte layer is less than 2 $\mu$m.

As the solvent, one with the boiling point higher than the glass transition temperature of the binder resin by less than 80°C is preferable, by less than 30°C is more preferable because the solvent is hard to remain in the matte acrylic resin film. In particular, a volatile solvent which can dissolve or homogeneously disperse each component of the binder resin and the matting agent, and which does not substantially affect physical properties of the acrylic resin film base (mechanical strength, transparency and the like), and further, which has the boiling point higher than the glass transition temperature of the resin component that is the main constituent of the acrylic resin film base by less than 80°C, preferably by less than 30°C is preferable. As the solvent, various publicly known solvents can be used. For example, alcoholic solvents such as methanol, ethanol, isopropyl alcohol, n-butanol, and ethylene glycol; aromatic solvents such as xylene, toluene, and benzene; aliphatic hydrocarbon solvents such as hexane and pentane; halogenated hydrocarbon solvents such as chloroform and tetrachloromethane; phenolic solvents such as phenol and cresol; ketones such as methyl ethyl ketone, methyl isobutyl ketone, acetone, and cyclohexanone; ether solvents such as diethyl ether, methoxy toluene, 1,2-dimethoxy ethane, 1,2-dibutoxy ethane, 1,1-dimethoxy methane, 1,1-dimethoxy ethane, 1,4-dioxane, and tetrahydrofrane (THF); fatty acid solvents such as formic acid, acetic acid, and propionic acid; acid anhydride solvents such as acetic acid anhydride; ester solvents such as ethyl acetate, n-propyl acetate, butyl acetate, and butyl formate; nitrogen-containing solvents such as ethylamine, toluidine, dimethylformamide, and dimethylacetamide; sulfur-containing solvents such as thiophene and dimethyl sulfoxide; solvents each of which has two or more kinds of functional groups such as diacetone alcohol, 2-methoxy ethanol (methyl cellosolve), 2-ethoxy ethanol (ethyl cellosolve), 2-butoxy ethanol (butyl cellosolve), diethylene glycol, 2-aminoethanol, acetone cyanohydrin, diethanolamine, morpholine, I-acetoxy-2-ethoxyethane, and 2-acetoxy-1-methoxypropane; and water can be listed. These solvents can be used alone or in combination of two or more kinds. Among them, the solvents containing ethyl acetate, n-propyl acetate, isopropyl alcohol, methyl ethyl ketone, or methyl isobutyl ketone as a main component are preferable because it is possible to lighten the degradation of physical properties of the acrylic resin film base caused by the solvents. Further, it is preferable to jointly use butyl acetate and methyl isobutyl ketone from the viewpoint of adhesion properties between the matte layer and the acrylic resin film base. Further, it is preferable to jointly use solvents having medium boiling points such as butyl acetate and methyl isobutyl ketone and solvents having high boiling points such as 2-acetoxy-1-methoxypropane and cyclohexanone from the viewpoint of uneven luster after coating.

When the paint is coated on the acrylic resin film base, viscosity of the paint is preferably in the range of 10 to 40 seconds in terms of falling time at the liquid temperature at the time of coating when measured with Iwata cup viscometer (manufactured by Anest Iwata Corporation, NK-2 model) from the viewpoint of coating appearance of the matte layer. When the viscosity of the paint in terms of falling time is 10 seconds or more, an excellent matte layer can be formed without any conspicuous designs of engraved pattern of a gravure roll at the time of coating by gravure coating method, and hence it is preferable. Further, components of the paint such as a binder resin, a matting agent, and an anti-scratch agent do not settle with time when the time for coating is long and the production stability of the coated products is excellent, and hence it is preferable. While, when the viscosity of the paint in terms of falling time is 40 seconds or less, the amount of the paint transferred to the acrylic resin film base is not decreased and doctor streaks have a tendency to be hard to occur so that an excellent matte layer can be formed, and hence it is preferable. Publicly known additives for improving solution properties such as an anti-skinning agent, a thickening agent, a suspending agent, an anti-sagging agent, an anti-foaming agent, and a leveling agent; and publicly known additives for improving coated film performance such as a light stabilizer, a ultraviolet light absorber, an antioxidant, an anti-fungus agent, a fungicide, and a fire retardant can be added. Usually, there is a case where coating is repeated for some dozen times to form a coated film of sufficient thickness on a molded article by coating, and in this case, it costs a lot and productivity is not so good. On the contrary, the laminated product of the present invention can easily form a very thick coated film because the matte acrylic resin film itself becomes the coated film and this means a high industrial utilization value.

(Pencil hardness of the matte acrylic resin film)

The matte acrylic resin film of the present invention preferably has the pencil hardness (measurement based on JIS K5600) of 2B or harder. The surface of the matte acrylic resin film is not easily scratched in the process of insert molding or in-mold decorating, and further, the anti-scratch property of the laminated product is improved by making the matte acrylic resin film have the pencil hardness of 2B or harder. Taking into account of the case where the matte acrylic resin film is used in laminated product such as parts for vehicles, the pencil hardness of the matte acrylic resin film of the present invention is preferably HB or harder. The pencil hardness of an acrylic resin film to be used for the substrate is important to obtain the matte acrylic resin film having such a pencil hardness. The pencil hardness of the acrylic resin film to be used for the substrate is preferably 2B or harder, more preferably HB or harder, and the most preferably F or harder.

(Resistance to yellowing by heat of the matte acrylic resin film)

As the matte acrylic resin film of the present invention, one in which the value obtained by subtracting the yellowness of the matte acrylic resin film measured right before it is heated (hereinafter, expressed as YI) from the one measured right after it is heated to 200˚C at a heating rate of 20 to 25˚C/sec under air atmosphere (hereinafter, expressed as YI'(200˚C)) is 1.3 or less is preferable. When the value is 1.3 or less, yellowing of the matte acrylic resin film is not observed in a general design such as woodgrain pattern in the case that insert molding or in-mold decorating is carried out, and a laminated product maintaining excellent design characteristics can be obtained. The value is preferably 1.0 or less. When the value is 1.0 or less, yellowing of the matte acrylic resin film is not observed even in a design with strong whiteness or in a metallic design which makes the yellowing of the matte acrylic resin film conspicuous, and a laminated product maintaining excellent design characteristics can be obtained. The value is more preferably 0.5 or less and particularly preferably 0.3 or less.

Further, the value obtained by subtracting YI from YI'(200˚C) is preferably -2.0 or more from the same viewpoint of maintaining the design before molding in the case that insert molding or in-mold decorating is carried out. The value obtained by subtracting the yellowness of the matte acrylic resin film (YI) from the one measured right after it is heated to 250˚C at a heating rate of 20 to 25˚C/sec under air atmosphere (hereinafter, expressed as YI'(250˚C)) is preferably 2.0 or less, though this is not particularly limited. The value is more preferably 1.5 or less, furthermore preferably 1.0 or less, and particularly preferably 0.5 or less. Further, the value obtained by subtracting YI from YI'(250˚C) is preferably -2.0 or more. Further, it is preferable that the yellowness of the matte acrylic resin film before heating is lower from the viewpoint of design characteristics in the case that printing is carried out on it, though this is not particularly limited. Concretely, the value is preferably 6.0 or less. As the yellowness of the matte acrylic resin film, the value obtained by measuring the matte layer side of the film is adopted, wherein the measurement is carried out after the film is cooled to the room temperature when the film has been heated and by using spectroscopic color difference meter SE2000 (manufactured by Nippon Denshoku Industries Co. Ltd.) with a condition of a standard light C and a reflecting mode, wherein an oil color paper of snow white of N9.5 in Mansell color system (standard color card 230, manufactured by Japan Color Enterprise Co. Ltd.) is laid on the surface of the acrylic resin base side. The difference of the yellowness factor of the matte acrylic resin film measured before heating and one measured after heating according to the present invention can be attained by constituting the matte layer with specific components. Concretely, it is necessary to properly select the components such as a matting agent and a curing agent from the viewpoint of resistance to yellowing by heat.

(Dynamic coefficient of friction of matte acrylic resin film)

The matte acrylic resin film of the present invention preferably has dynamic coefficient of friction between the matte layer side and Broad No.60 (hereinafter, expressed as dynamic coefficient of friction of the matte layer side) of 0.23 or less under the test condition of the test velocity of 100 mm/min, the moving distance of 10 mm, and the load of 9.8N.
Pencil hardness has been widely used as an index of anti-scratch property in conventionally known matte acrylic resin films, however, dynamic coefficient of friction is also an important index as well as pencil hardness in the matte acrylic resin film in which the matte layer is formed on the acrylic resin film. In other words, the anti-scratch property of the matte acrylic resin film becomes more excellent as the dynamic coefficient of friction becomes smaller. For example, in the case of the matte acrylic resin film in which the matte layer is formed on the acrylic resin film, excellent anti-scratch property cannot be realized if it does not have the dynamic coefficient of friction of 0.23 or less, even if it has the pencil hardness of H.

In the case of the matte acrylic resin film having the dynamic coefficient of friction of the matte layer side of 0.23 or less, the surface of the matte acrylic resin film is hard to be scratched in the process of insert molding or in-mold decorating, and further, anti-scratch property of the laminated product is improved.

The laminated product using the matte acrylic resin film of the present invention can be suitably used in various parts for vehicles such as door waist garnish, front control panel, power window switch panel, and air bag cover. It is industrially quite useful from the viewpoint of expanding the use application.

<Design layer>

A design layer may be formed in the matte acrylic resin film of the present invention to give design characteristics to various substrates. In this case, it is preferable to form a design layer on the opposite side of the matte layer of the acrylic resin film base. Further, in the case of forming a laminated product, it is preferable to arrange the design layer at the contacting face to the substrate in view of protecting a decorated face and giving an impression of superior quality. The design layer can be formed by publicly known methods. As the design layer, a print layer formed by printing method or a vapor deposited layer formed by vapor deposition method is preferable.

(Print layer)

The print layer is situated on the surface of the laminated product obtained by insert molding or in-mold decorating and serves as a design or a character or the like. As a printing pattern, for example, a design such as a wood grain, a marble grain, a cloth grain, a sand grain, a geometrical pattern, a character, or set-solid can be listed. As the binder of the print layer, resins like a polyvinyl resin such as a vinyl chloride-vinyl acetate copolymer, a polyamide resin, a polyester resin, a polyacrylic resin, a polyurethane resin, a polyvinyl acetal resin, a polyester urethane resin, a cellulose ester resin, an alkyd resin, and chlorinated polyolefin resin can be listed. It is preferable for forming of the print layer to use a binder and a color ink containing a pigment or a dye of a proper color as a coloring agent. As the pigment, for example, the following materials can be listed. As a yellow pigment, an azo pigment such as a polyazo and an organic pigment such as isoindoline; an inorganic pigment such as chrome yellow can be listed. As a red pigment, an azo pigment such as a polyazo and an organic pigment such as quinacridone; an inorganic pigment such as red iron oxide can be listed. As a blue pigment, an organic pigment such as phthalocyanine blue; an inorganic pigment such as cobalt blue can be listed. As a black pigment, an organic pigment such as aniline black can be listed. As a white pigment, an inorganic pigment such as titanium dioxide can be listed. As the dye, various publicly known dyes can be used as long as they do not deteriorate the effect of the present invention.

As a method for forming the print layer, publicly known printing methods such as offset printing method, rotogravure printing method, and screen printing method; publicly known coating methods such as roll coating method and spray coating method; flexographic printing method and the like can be listed. The thickness of the print layer may be properly determined according to the need and it is usually about 0.5 to 30 $\mu$m. The number of blank printing failure in the print layer is preferably 10 / $m^2$ or less from the viewpoint of design characteristics and decorating properties. When the number of blank printing failure is 10 / $m^2$ or less, the appearance of the laminated product using the matte acrylic resin film becomes better. The number of blank printing failure in the print layer is more preferably 5 / $m^2$ or less and particularly preferably 1 / $m^2$ or less. The thickness of the print layer may be properly determined so as to obtain a desired surface appearance of the laminated product obtained by insert molding or in-mold decorating, in accordance with the level of the extension of the print layer at the time of insert molding or in-mold decorating.

(Vapor deposited layer)

The vapor deposited layer is composed of at least one metal selected from the group consisting of aluminum, nickel, gold, platinum, chromium, iron, copper, indium, tin, silver, titanium, lead, and zinc or an alloy or a compound of these metals. As a method for forming the vapor deposited layer, vacuum depositing method, spattering method, ion plating method, metal plating method and the like can be listed. The thickness of the vapor deposited layer may be properly determined so as to obtain a desired surface appearance of the laminated product obtained by insert molding or in-mold decorating, in accordance with the level of the extension of the vapor deposited layer at the time of insert molding or in-mold decorating.

<Other layers>

(Bonding layer)

A bonding layer may be provided with the matte acrylic resin film of the present invention, if necessary. It is preferable to form the bonding layer on the opposite side of the matte layer.

(Cover film)

Further, the matte acrylic resin film of the present invention may be provided with a cover film. The cover film is effective for protection of the surface of the matte acrylic resin film from the dust. The cover film can be provided on the surface of the matte layer, on the opposite surface of the matte layer or on both surfaces. It is preferably provided at least on the surface of the matte layer. In the case that the cover film is provided on the surface of the matte layer, it is necessary for the cover film to have appropriate adhesion and releasability in order that the cover film can adhere to the matte layer until in-mold decorating or insert molding is carried out and it is immediately released at the time of in-mold decorating or insert molding. As the cover film, any film can be selected to use as long as it satisfies these conditions. Such a film includes polyethylene film, polypropylene film, and polyester film.

(Thermoplastic resin layer)

The matte acrylic resin film of the present invention can be formed into a laminated film or sheet by further laminating the matte acrylic resin film on a thermoplastic resin layer. As the direction of the lamination of the matte acrylic resin film on the thermoplastic resin layer, it is preferable that the lamination is carried out in such a way that the surface on the opposite side of the matte layer is contacted to the thermoplastic resin layer. The thermoplastic resin layer is preferably composed of materials which have compatibility with the substrate in order to improve adhesion properties to the substrate. The thermoplastic resin layer is more preferably composed of the same materials as those of the substrate. As the thermoplastic resin layer, publicly known thermoplastic resin films or sheets can be used and, for example, acrylic resins; ABS resins (acrylonitrile-butadiene-styrene copolymers); AS resins (acrylonitrile-styrene copolymers); vinyl chloride resins; polyolefins such as polyethylene, polypropylene, polybutene, and polymethylpentene; polyolefin copolymers such as ethylene-vinyl acetate copolymer or its saponified compound and ethylene-(meth)acrylate copolymer; polyester resins such as polyethylene terephthalate, polybutylene terephthalate, polyethylene naphthalate, polyallylate, and polycarbonate; polyamides such as 6-nylon, 6,6-nylon, 6,10-nylon, and 12-nylon; polystyrene resins; cellulose derivatives such as cellulose acetate and cellulose nitrate; fluorocarbon resins such as polyvinyl fluoride, polyvinylidene fluoride, polytetrafluoroethylene, and ethylene-tertafluoroethylene copolymer; or copolymers or mixtures, composites, or laminates of two or three kinds or more selected from these resins can be listed. Among these, acrylic resins, ABS resins, vinyl chloride resins, polyolefins, and polycarbonate are preferable as the thermoplastic resin layer from the viewpoint of formability of the design layer (it is possible to form the design layer onto the thermoplastic resin layer instead of the matte acrylic resin film) and secondary formability of the laminated film or sheet. General formulating ingredients such as a stabilizer, an antioxidant, a lubricant, a processing aid, a plasticizer, an impact modifier, a foaming agent, a filler, an anti-fungus agent, a fungicide, a mold release agent, an antistatic agent, a coloring agent, a ultraviolet light absorber, a light stabilizer, a heat stabilizer, and a fire retardant may be added. The thickness of the thermoplastic resin layer may be properly determined according to the need and it is usually about 20 to 500 $\mu$m. The thermoplastic resin layer preferably has such a thickness that the appearance of the matte acrylic resin film can be shown as a perfectly smooth surface, the surface defects of the substrate can be absorbed, or the design layer cannot be disappeared at the time of injection molding. As the method for obtaining the laminated film or sheet, publicly known methods such as heat lamination, dry lamination, wet lamination, and hot melt lamination can be listed. Further, it is possible to laminate the matt acrylic resin film and the thermoplastic resin layer by injection lamination.

When the matte acrylic resin film of the present invention is formed into a laminated film or sheet, sufficient strength at the time of handling against external forces such as impacts and deformations can be realized. For example, cracks are hard to occur and handleability becomes excellent even by the impact and deformation caused when a film released from a mold after the film is vacuum molded by insert molding or the like or when the vacuum molded article is mounted on the mold for injection molding. Further, for example, an advantage such as minimizing the propagation of surface defects of the injection-molded substrate to the matte acrylic resin film or making the design layer hard to disappear when the substrate is injection molded can be given. Surface finishing such as corona treatment, ozone treatment, plasma treatment, ionizing radiation treatment, dichromic acid treatment, anchor and primer treatment may be carried out, if necessary. It can provide excellent adhesion properties between the matte acrylic resin film and the design layer, between the thermoplastic resin layer and the design layer, between the matte acrylic resin film and the thermoplastic resin layer, and the like.

(Laminated product)

The laminated product of the present invention is the one in which the matte acrylic resin film, or the laminated film or sheet of the matte acrylic resin film of the present invention is laminated on the substrate. In this case, it is preferable to form the laminated product by laminating the matte acrylic resin film on the substrate in such a way that the opposite surface of the matte layer is contacted to the substrate. As the material of the substrate, resins; wood plates such as a wood veneer, a plywood, a particleboard, and a medium density fiberboard (MDF); ligneous plates such as a wood fiberboard; metals such as iron and aluminum; and the like can be listed. As the resins, publicly known resins, irrespective of their kinds, can be used. As the resins, for example, polyolefins such as polyethylene, polypropylene, polybutene, polymethylpentene, ethylene-propylene copolymer, ethylene-propylene-butene copolymer, and olefinic thermoplastic elastomer; general-purpose thermoplastic or thermosetting resins such as polystyrene resins, ABS resins (acrylonitrile-butadiene-styrene copolymers), AS resins (acrylonitrile-styrene copolymers), acrylic resins, urethane resins, unsaturated polyester resins, and epoxy resins; general-purpose engineering plastics such as poly (phenylene oxide)-polystyrene resin, polycarbonate, polyacetal, polycarbonate-modified polyphenylene ether, and polyethylene terephthalate; super engineering plastics such as polysulfone, polyphenylene sulfide, polyphenylene oxide, polyether imide, polyether imide, polyimide, liquid crystal polyester, and polyallyl heat resistant resins; composite or various modified resins added with reinforcing materials such as glass fiber or inorganic fillers (talc, calcium carbonate, silica, mica, and the like) and with modifiers such as rubber components can be listed. Among them, as the materials of the substrate, those which can melt and adhere to the matte acrylic resin film or the laminated film or sheet of the matte acrylic resin film are preferable. For example, ABS resin, AS resin, polystyrene resin, polycarbonate resin, polyvinyl chloride resin, acrylic resin, polyester resin, or resins composed mainly of these resins can be listed. ABS resin, AS resin, polycarbonate resin, polyvinyl chloride resin, or a resin composed mainly of these resins is preferable in respect of adhesion, in particular, ABS resin, polycarbonate resin, or a resin composed mainly of these resins is more preferable. Even in the case of the resins which do not melt and adhere such as polyolefin resins, it is possible to adhere the substrate to the one selected from the group consisting of the matte acrylic resin film and the laminated film or sheet of the matte acrylic resin film by providing a bonding layer at the time of molding.

As the method for producing the laminated product of the present invention, publicly known methods such as heat lamination can be used in the case that the laminated product has a two-dimensional shape and the substrate can melt and adhere. For example, in the case of the substrates which do not melt and adhere like wood plates such as a wood veneer, a plywood, a particleboard, and a medium density fiberboard (MDF); ligneous plates such as a wood fiberboard; and metals such as iron and aluminum, lamination can be carried out through a bonding layer. In the case of the laminated product having a three-dimensional shape, publicly known methods such as insert molding and in-mold decorating can be used. The in-mold decorating is a method in which a laminated product is obtained in such a way that the matte acrylic resin film, or the laminated film or sheet of the matte acrylic resin film and the substrate are united in a body by heating the matte acrylic resin film, or the laminated film or sheet of the matte acrylic resin film, subjecting it to vacuum molding in a mold equipped with a function of evacuation, and then injection molding the substrate resin in the same mold. The in-mold decorating is preferable from the viewpoint of workability and economic reasons because the film forming and the injection molding can be carried out altogether in one step. In the case that the in-mold decorating is carried out using a publicly known acrylic resin film with a design layer, there is a case in which the design layer in the vicinity of a gate disappears, depending on the shape of the mold and the condition of the injection molding. The gate is mainly classified into two, namely, a non-restricted gate which does not narrow the path of the resin flow at the gate and a restricted gate which does narrow the path of the resin flow at the gate. As representative examples of the latter, pinpoint gate, side gate, submarine gate and the like can be listed. In the case of the restricted gate, the design layer is liable to disappear because there is a rise in temperature when the resin passes the gate or there is a rise in pressure of the resin of the injection molding loaded per unit surface area of the surface of the acrylic resin film near the gate, though the residual stress near the gate is reduced. The laminated film or sheet having a thermoplastic resin layer is preferable in point of that the existence of the thermoplastic resin layer can reduce the disappearance of the design layer. The heating temperature in-mold decorating is preferably the softening temperature or more of the matte acrylic resin film or the laminated film or sheet of the matte acrylic resin film. Concretely, it may be properly set depending on the thermal property of the film or the shape of the laminated product, and it is ordinarily 70°C or more. Further, when the heating temperature is too high, the surface appearance or the mold releasability is liable to deteriorate. Subsequently, the temperature may be properly set depending on the thermal property of the film or the shape of the laminated product, and it is usually 170°C or less. Further, the lower preliminary heating temperature at the time of vacuum molding is preferable from the viewpoint of energy efficiency. Concretely, it is preferably 135°C or less. Further, in the case of a film which can be molded even at a low preliminary heating temperature, it is possible to shorten the preliminary heating time instead of lowering the preliminary heating temperature. In this case, the vacuum molding can be carried out in high cycle and this means a high industrial utilization value.

The matte acrylic resin film or the laminated film or sheet of the matte acrylic resin film of the present invention is rich in ductility at high temperature and this is very beneficial in the case that the film is formed into a three-dimensional shape by vacuum molding. As the resin to be subjected to injection molding, all the resins which can be subjected to injection molding, irrespective of the kinds, can be used. It is preferable to make the shrinkage factor of the resin after injection molding get near the shrinkage factor of the matte acrylic resin film or the laminated film or sheet of the matte acrylic resin film because troubles such as warps of the laminated products obtained by in-mold decorating or insert molding or peelings of the film or sheet thereof can be solved. The laminated product of the present invention is particularly suitable for parts for vehicles and building materials. As concrete examples, it is suitably used for interior of vehicles such as instrument panel, console box, meter cover, door lock bezel, steering wheel, power window switch base, center cluster, and dash-board; exterior of vehicles such as weather strip, bumper, bumper guard, side mad guard, body panel, spoiler, front grill, strut mount, wheel cap, center pillar, door mirror, center ornament, side mole, door mole, window mole, window, headlamp cover, tail lamp cover, and parts for windshield; front panel, button, emblem, and surface facing materials of audio visual system and furniture goods; housing, display window, and button of mobile phone, and the like; covering material for furniture; building interior material such as wall, ceiling, and floor; building exterior material such as outer wall like siding, fence, roof, gate, and gable board; surface decorative panel of furniture such as window frame, door, handrail, doorsill, and door-head; optical parts such as various displays, lens, mirror, goggle, and window glass; interior parts of various vehicles other than automobiles such as trains, air planes, and ships; various packaging containers and materials such as bottles, cosmetic containers, and smalls containers; and various miscellaneous uses like sundry goods such as gifts and smalls. When the matte acrylic resin film provided with a matte layer of 0.1 $\mu$m or more and less than 2 $\mu$m thickness containing at least a matting agent and a curable binder resin and being formed on one surface of an acrylic resin film base is adopted in accordance with the present invention, design characteristics that is difficult to be realized in the conventional case where a matting agent is added to an acrylic resin film layer and excellent handleability can be realized and the matte acrylic resin film, the matte layer of which does not generate cracks even in the case of deep drawing of insert molding or in-mold decorating, and which has anti-scratch property, surface hardness, heat resistance, chemical resistance, resistance to yellowing by heat, and flatting that can be used for vehicles, and the laminated product formed by laminating the matte acrylic resin film on a substrate can be provided. Further, the matte acrylic resin film can be stably produced by adopting the method of the present invention. It is possible for the matte acrylic resin film of the present invention to drastically extend the use compared with the conventional acrylic resin film.

Hereinafter, the present invention will be further explained in detail with reference to examples, however, the present invention is not limited to these examples. In these examples, "parts" represents "parts by mass" and "%" represents "% by mass" except for heat shrinkage factor, surface gloss, and yellowing. Further, the following respective abbreviations in these examples are as follows:

MMA : methyl methacrylate
MA : methyl acrylate
n-BA : n-butyl acrylate
St : styrene
1,3-BD : 1,3-butyleneglycol dimethacrylate
AMA : allyl methacrylate
CHP : cumene hydroperoxide
t-BH : t-butyl hydroperoxide
n-OM : n-octyl mercaptan
EDTA : disodium ethylenediaminetetraacetate
HEMA : 2-hydroxyethyl methacrylate

(Methods of measurement and evaluation of physical properties)

The physical properties of rubber-containing polymer (I') and rubber-containing multistage polymer (I), thermoplastic polymer (II), and thermoplastic polymer (IV), acrylic resin film base (A) to (C) prepared, and the matte acrylic resin films and the laminated products obtained in Examples 1 to 10 were measured and evaluated as shown below. The evaluation of the laminated products were carried out by using laminated products formed for the evaluation of moldability shown in (12) and (13) below.

(1) Mass average particle diameter of the rubber-containing polymer (I') and the rubber- containing multistage polymer (I):

The polymer latexes of the rubber-containing polymer (I') and the rubber-containing multistage polymer (I) obtained by emulsion polymerization were measured by dynamic light scattering using light-scattering photometer DLS-700 (trade name) manufactured by Otsuka Electronics Co., Ltd.

(2) Gel content of the rubber-containing polymer (I') and the rubber-containing multistage polymer (I):

The predetermined amount (mass before extraction) of the rubber-containing polymer (I') and the rubber-containing multistage polymer (I) (coagulated powder obtained after polymerization) ,respectively, was subjected to extraction treatment in acetone solvent under reflux condition, and each resultant liquid was subjected to centrifugation and separated, and the mass of the acetone insolubles, after dried, was measured (mass after extraction) to obtain gel content of the rubber-containing polymer (I') and the rubber-containing multistage polymer (I), respectively, which was calculated by the following formula.

$$\text{Gel content (\%)} = \text{mass after extraction (g) / mass before extraction (g)} \times 100$$

(3) Glass transition temperature (Tg) of the rubber-containing polymer (I') and the rubber-containing multistage polymer (I), and binder resins:

These were calculated by FOX equation using the values described in Polymer Handbook (J. Brandrup, Interscience, 1989).

(4) Reduced viscosities of the thermoplastic polymer (II) and the thermoplastic polymer (IV):

Reduced viscosities were measured at 25˚C by dissolving 0.1 g of each polymer into 100 mL of chloroform.

(5) Hydroxyl values of the binder resins:

Hydoxyl values were measured according to JIS K0070.

(6) Mass average molecular mass of the binder resins:

Each value was obtained in terms of an equivalent standard polystyrene molecular mass by using Shimazu LC-6A system (manufactured by Shimadzu Corporation), THF as a solvent and a GPC column comprising KF-805L (manufactured by Showa Denko K.K.), three of which were connected.

(7) Heat shrinkage factor of the acrylic resin film base:

Three parallel straight lines with a space of 5 cm between the lines were drawn in the machine direction (MD) (the direction of flow at the time of forming film) and the transverse direction (TD) (the direction perpendicular to the machine direction) on the surface of the acrylic resin film base cut out in A4 size, and the space was precisely measured with a pair of calipers. The measurement of the space was carried out at two points and the points were marked. Subsequently, the resultant acrylic resin film base was left alone for 60 minutes under the atmosphere of 130˚C, and then taken out, and the spaces of the same points where the previous measurements had been carried out were measured again. The heat shrinkage factor was calculated according to the following formula using the average value of the spaces of the two points. Heat shrinkage factor (%) = ((the space before heating - the space after heating) / the space before heating) x 100.

(8) The thickness of the matte layer of the matte acrylic resin film:

The thickness of the matte layer was determined by cutting the film in the cross-sectional direction with the thickness of 70 nm from the surface as a sample, observing the sample with a transmission electron microscope (J100S manufactured by JEOL Ltd.), measuring the thickness at 5 points of the sample, and averaging these values. Further, the thickness of the matte layer was measured by observing a portion where a matting agent does not exist, namely a portion which consists of a binder resin.

(9) Pencil hardness of the matte acrylic resin film:

Pencil hardness of the matte acrylic resin film was measured according to JIS K5400. Pencil hardness of the surface of the matte layer was measured.

(10) Surface gloss of the matte acrylic resin film:

Surface gloss of the matte surface at the angle of 60 degrees was measured with Gloss Meter (GM-26D (trade name) manufactured by Murakami Color Research Laboratory).

(11) Yellowing at the time of heat treatment of the matte acrylic resin film:

The matte acrylic resin film of about 75 $\mu$m thickness was fixed at a clamp frame of Pressure and Vacuum Forming Machine (manufactured by Asano Laboratories Co., Ltd.) equipped with two far infrared heater panels one of which was set at 350˚C at an upper portion and the other of which was set at 500˚C at a lower portion. The far infrared heater panels were placed at both the sides of the matte acrylic resin film fixed at the clamp frame, being set at 100 mm above and below the film, respectively. The surface temperature of the matte acrylic resin film before heated was 25˚C. From this point, the matte acrylic resin film had been heated until the surface temperature reached a fixed temperature. It took about 11 seconds for the surface temperature of the film to reach 250˚C and the heating speed was about 20˚C/sec. Further, it took about 7 seconds for the surface temperature of the film to reach 200˚C and the heating speed was about 25˚C/sec. The surface temperature was measured with a noncontact thermometer placed above the clamp. Subsequently, the film was cooled to the room temperature, and the yellowness of the matte acrylic resin film, namely YI', was obtained by measuring the matte layer side of the film as a measuring side, using spectroscopic color difference meter SE2000 (manufactured by Nippon Denshoku Industries Co. Ltd.) with a condition of a standard light C and a reflecting mode, wherein an oil color paper of snow white of N9.5 in Mansell color system (standard color card 230, manufactured by Japan Color Enterprise Co. Ltd.) is laid on the surface of the acrylic resin base side. While, the yellowness of the matte acrylic resin film before it is heated, namely YI, was obtained by the same procedure, and yellowing at the time of heat treatment of the matte acrylic resin film was evaluated by the value obtained by subtracting YI from YI'.

(12) Insert moldability of the matte acrylic resin film:

To the matte acrylic resin film of about 75 $\mu$m thickness, a silver-metallic layer was formed by gravure printing as a design layer on the acrylic resin film base side. Further, an ABS sheet of 1 mm thickness having a bonding layer was laminated to the resultant matte acrylic resin film by heat lamination to obtain a laminated sheet of the matte acrylic resin film so that the bonding layer and the silver-metallic layer are contacted. Molding was carried out using this laminated sheet. Concretely, the resultant laminated sheet was placed in a mold equipped with a function of evacuation in such a way that the matte acrylic resin film side becomes a cavity side, and heated with a heater until the laminated sheet reached 190˚C, and subjected to vacuum molding. Subsequently, an unnecessary part of the resultant molded article was trimmed off. The resultant vacuum molded laminated sheet was placed on a bottom of a mold of the cavity side, the bottom of which has depressions of 1 cm$^2$ in area and 1 mm in depth located at positions of 3 cm in horizontal direction from the central gate, respectively, in such a way that the matte acrylic resin film side faces a cavity side. Subsequently, an ABS resin (manufactured by UMG ABS, Ltd., trade name "DIAPET ABS BULKSAM TM25") which is to be used for a substrate was injection molded onto the ABS sheet side of the laminated sheet and a laminated product was obtained by insert molding. The detailed shape of the laminated product is a box shape of 150 mm in length, 120 mm in width, 2 mm in thickness, and 10 mm in depth, and the gates of the mold are located at three positions, in all , one at the center of the laminated product, two at 40 mm upper and lower portions (longitudinal direction of the laminated product) of the central gate, respectively, and the shape of the gates is a pinpoint gate with a diameter of 1 mm. Further, the corner R formed by the bottom face and the side face of the cavity side of the mold is about 3. That is, the corner R at the edge part of the laminated product side where the acrylic resin film is laminated is about 3. The corner R was measured with RADIUS GAGE manufactured by Fuji Tool Co., Ltd.

The injection molding was carried out using J85ELII Injection Molding Machine ((trade name) manufactured by The Japan Steel Works, Ltd.) under the conditions of: the cylinder temperature of 250˚C; the injection speed of 30%; the injection pressure of 43%; and the mold temperature of 60˚C.

The state of the convex parts of 1 cm$^2$ in area and 1 mm in height formed on the resultant laminated product (represented as "convex part" in Table 2) or the state around the corner at the edge part of the laminated product (represented as "comer" in Table 2) was observed and evaluated as follows:

(As to cracks of the convex part)

○: No crack was observed.
×: Large crack was observed in the matte layer.

(As to cracks around the corner)

○: No crack was observed.
×: Large crack was observed in the matte layer.

(As to whitening of the convex part)

○: No whitening of the film was observed.
×: Strong whitening of the film was observed.

(As whitening around the corner)

○: No whitening of the film was observed.
×: Strong whitening of the film was observed.

(13) In-mold moldability of the matte acrylic resin film:

In-mold decorating was carried out using the matte acrylic resin film of about 75 $\mu$m thickness. Concretely, the in-mold decorating was carried out using a mold equipped with a function of evacuation and having depressions of 1 cm$^2$ in area and 1 mm in depth located at positions of 3 cm in horizontal direction from the central gate, respectively, and an in-mold decorating machine combined with J85ELII Injection Molding Machine ((trade name) manufactured by The Japan Steel Works, Ltd.) and Hotpack System ((trade name) manufactured by Nissha Printing Co., Ltd.). The detailed shape of the laminated product is a box shape of 150 mm in length, 120 mm in width, 2 mm in thickness, and 10 mm in depth, and the gates of the mold are located at three positions, in all, one at the center of the laminated product, two at 40 mm upper and lower portions (longitudinal direction of the laminated product) of the central gate, respectively, and the shape of the gates is a pinpoint gate with a diameter of 1 mm. Further, the corner radius of the angle formed by the bottom face and the side face of the cavity side of the mold is about 3. That is, the corner radius at the edge part of the laminated product where the acrylic resin film is laminated is about 3. The corner radius was measured with Radius Gage manufactured by Fuji Tool Co., Ltd. The vacuum molding of the matte acrylic resin film was carried out under the conditions of the fixed heater temperature of about 330˚C, the heating time of 12 seconds, and the distance of 15 mm between the heater and the film, and the vacuum molding was carried out in a direction in which the matte layer contacts with the mold. Further, the injection molding to be continuously carried out in the same mold was carried out under the conditions of the cylinder temperature of 250˚C, the injection speed of 30%, the injection pressure of 43%, and the mold temperature of 60˚C, the substrate resin being injected from the nonmatte layer side. As the substrate resin, a heat resistant ABS resin (manufactured by UMG ABS, Ltd., trade name "BULKSAM TM25B") was used. The state of the convex parts of 1 cm$^2$ in area and 1 mm in height formed on the resultant laminated product or the state around the corner at the edge part of the laminated product was observed and evaluated as follows:

(As to cracks of the convex part)

○: No crack was observed.
×: Large crack was observed in the matte layer.

(As to cracks around the corner)

○: No crack was observed.
×: Large crack was observed in the matte layer.

(As to whitening of the convex part)

○: No whitening of the film was observed.
×: Strong whitening of the film was observed.

(As to whitening around the corner)

○: No whitening of the film was observed.
×: Strong whitening of the film was observed.

(14) Dynamic coefficient of friction of the laminated product:

Dynamic coefficient of friction of the matte layer side of the laminated product in which the matte acrylic resin film was laminated was measured under the conditions of: the test velocity of 100 mm/min; the moving distance of 10 mm; and the load of 9.8N, when Broad No.60 was used as an opponent material against which the matte layer side of the laminated product was rubbed. The molded article of (13) was used as a sample, and the average value at 5 measuring points was used as the dynamic coefficient of friction.

(15) Anti-scratch property of the laminated product:

(Condition 1) A laminated product was pressed down against a sheet of Broad No.60 with the load of 0.01 MPa and reciprocated 1,000 times with the stroke width of 100 mm and the speed of 30 reciprocations per minute. The appearance of the laminated product was evaluated as follows:

◎: No change was observed.
○: Slight scratch was observed.
∆: Slight failure in appearance as if the products were polished was observed.
× :Marked failure in appearance as if the products were polished was observed.

(Condition 2) A laminated product was pressed down against five piled layers of gauze with the load of 0.049 MPa and reciprocated 200 times with the stroke width of 100 mm and the speed of 30 reciprocations per minute. The appearance of the laminated product was evaluated as follows:

◎: No change was observed.
○: Slight scratch was observed.
∆: Slight failure in appearance as if the products were polished was observed.
×:Marked failure in appearance as if the products were polished was observed.

(16) Chemical resistance of the laminated product:

A polyethylene cylinder having internal diameter of 38 mm and height of 15 mm is placed on the surface of a test piece of a laminated product and tightly contacted to the test piece by a contact bonding machine, and 5 ml of an aromatic liquid for vehicles, Grace Mate Poppy citrus type manufactured by Dia Chemical Co., Ltd. is poured into the opening of the cylinder. The opening is covered up with a glass plate and the resultant system is placed in a thermostatic chamber kept at 55°C for 4 hours. After this test, the contact bonding machine is detached, the test piece is washed by water and air-dried, and the whitening state of the surface of the tested portion was observed.

○: No separation of the matte layer is observed (No failure in appearance as if the products were polished is observed).
∆: Slight separation of the matte layer is observed (Slight failure in appearance as if the products were polished is observed).
×: Marked separation of the matte layer is observed(Marked failure in appearance as if the products were polished is observed).

(17) Appearance of the laminated product:

The looks of a design layer of a laminated product under the light of a fluorescent lamp was evaluated by visual observation.

○: Reflection of the light of a fluorescent lamp is slightly observed, and in the case of a molded article by insert molding, the design of a design layer is clearly seen and silver-metallic impression of the design layer is excellent because the design layer becomes slightly white.
X: Reflection of the light of a fluorescent lamp is observed, however, the reflection becomes blurred because the undulation of the matte surface of the molded article has become larger compared with that of the matte acrylic resin film before molded.

(18) Appearance of the laminated product (evaluation of yellowing):

The looks of a design layer of a laminated product was evaluated by visual observation.

○: No change is observed compared with the design layer before the laminated product is molded.

×: Marked yellowing is observed compared with the design layer before the laminated product is molded and the design looks different.

(Manufacturing example 1)

(Manufacture of rubber-containing multistage polymer (I))

To a container equipped with a stirrer, 10.8 parts of deionized water was charged and a monomer component composed of 0.3 part of MMA, 4.5 parts of n-BA, 0.2 part of 1,3-BD, 0.05 part of AMA, and 0.025 part of CHP was added and mixed while stirred under room temperature. Subsequently, 1.3 parts of emulsifier (manufactured by TOHO Chemical Industry Co., Ltd., trade name "Phosphanol RS610NA") was added in the container while stirred and the stirring was continued for 20 minutes to prepare an emulsion. Then, 139.2 parts of deionized water was filled in a container for polymerization equipped with a cooler and heated to 75˚C. Further, a mixture prepared by adding 0.20 part of sodium formaldehyde sulfoxylate, 0.0001 part of ferrous sulfate, and 0.0003 part of EDTA in 5 parts of ion exchanged water was added at a time in the container for polymerization. Subsequently, the prepared emulsion was dropped into the container for polymerization over the period of 8 minutes while stirred under nitrogen atmosphere, and the reaction was continued for 15 minutes to complete the first stage polymerization of an elastomeric polymer (I-A-1). Subsequently, a monomer component composed of 9.6 parts of MMA, 14.4 parts of n-BA, 1.0 part of 1,3-BD, and 0.25 part of AMA was dropped together with 0.016 part of CHP into the container for polymerization over the period of 90 minutes, and the reaction was continued for 60 minutes to complete the second stage polymerization of an elastomeric polymer (I-A-2) and an elastomeric polymer (I-A) was obtained. Tg of the polymer (I-A-1) alone was -48˚C, and Tg of the polymer (I-A-2) alone was -10˚C. Subsequently, a monomer component composed of 6 parts of MMA, 4 parts of MA, and 0.075 part of AMA was dropped together with 0.0125 part of CHP into the container for polymerization over the period of 45 minutes, and the reaction was continued for 60 minutes to form an intermediate polymer (I-B). Tg of the intermediate polymer (I-B) was 60˚C. Subsequently, a monomer component composed of 57 parts of MMA, 3 parts of MA, 0.264 part of n-OM, and 0.075 part of t-BH was dropped into the container for polymerization over the period of 140 minutes, and the reaction was continued for 60 minutes to form a rigid polymer (I-C) and a polymer latex of rubber-containing multistage polymer (I) was obtained. Tg of the rigid polymer (I-C) alone was 99˚C. Further, the mass average particle diameter of the rubber-containing multistage polymer (I) measured after polymerization was 0.11 μm. The resultant polymer latex of the rubber-containing multistage polymer (I) was filtrated using vibration type filter equipped with a stainless steel mesh (average mesh opening : 62 μm) as a filter, subjected to salting out by using an aqueous solution containing 3.5 parts of calcium acetate, washed with water and recovered, and dried to obtain a powder rubber-containing multistage polymer (I). Gel content of the resultant rubber-containing multistage polymer (I) was 70%.

Further, 214.3 g of the resultant rubber-containing multistage polymer (I) was transferred into 1,500 ml of acetone which had been filtrated by nylon mesh with 25 μm-mesh opening and stirred for 3 hours to prepare an acetone dispersion of the rubber-containing multistage polymer (I). Subsequently, the resultant dispersion was filtrated through a nylon mesh with 32 μm-mesh opening and the filter residue on the mesh was washed in chloroform by subjecting the filter residue to ultrasonic cleaning for 15 minutes together with the nylon mesh. Subsequently, the resultant filter residue after subjected to ultrasonic cleaning was transferred into 150 ml of acetone which had been filtrated by nylon mesh with 25 μm-mesh opening together with the nylon mesh, and the resultant liquid was subjected to ultrasonic treatment for 15 minutes and then the nylon mesh was removed to prepare 150 ml of acetone dispersion of the filter residue on the mesh. Subsequently, 70 ml of the resultant dispersion was measured with automatic liquid-borne particle counter manufactured by Rion Co., Ltd. (type : KL-01) at 25˚C and the number of the particles having diameter of 55 μm or more was 10.

(Manufacturing example 2)

(Manufacture of rubber-containing polymer (I'))

To a reactor equipped with a reflux condenser, 244 parts of deionized water was charged under nitrogen atmosphere and heated to 80˚C. Subsequently, (α) shown in Table 1 was added, and 1/15 of (β) shown in Table 1, which is a raw material for the first stage polymer (I'-A-1) of the elastomeric polymer shown in Table 2, was added while the system was stirred, and kept for 15 minutes. Subsequently, the remainder of the raw material (β) was continuously added with a speed with which the increasing rate of the monomer component, namely ((the raw material (β)>>, to water becomes 8% /hour, and kept for 60 minutes to obtain a latex of the first stage polymer (I'-A-1) of the elastomeric polymer. Tg of the polymer (I'-A-1) alone was 24°C. Subsequently, 0.6 part of sodium formaldehyde sulfoxylate was added to the resultant latex and kept for 15 minutes. Then, (χ) shown in Table 1, which is a raw material for the second stage polymer (I'-A-2) of the elastomeric polymer shown in Table 2, was continuously added with a speed with which the increasing rate of the monomer component, namely [the raw material (χ)], to water becomes 4% / hour, while the system was stirred at 80°C under nitrogen atmosphere, and kept for 120 minutes to form the second stage polymer (I'-A-2) of the elastomeric polymer and a latex of the elastomeric polymer (I'-A) was obtained. Tg of the polymer (I'-A-2) alone was -38 C. Subsequently, 0.4part of sodium formaldehyde sulfoxylate was added to the resultant latex and the system was kept for 15 minutes. Then, (δ) shown in Table 1, which is a raw material for the rigid polymer (I'-C) shown in Table 2, was continuously added with a speed with which the increasing rate of the monomer component, namely <<the raw material (δ)>>, to water becomes 10% / hour, while the system was stirred at 80°C under nitrogen atmosphere, and kept for 60 minutes to form the rigid polymer (I'-C) and a latex of the rubber-containing polymer (I') was obtained. Tg of the rigid polymer (I'-C) alone was 99°C. Further, the mass average particle diameter of the rubber-containing polymer (I') measured after polymerization was 0.28 μm. Calcium acetate was added to the resultant polymer latex of the rubber-containing polymer (I') and the system was subjected to coagulation, agglomeration and solidification reaction, and filtrated, washed by water and dried to obtain a powder rubber-containing polymer (I'). Gel content of the resultant rubber-containing polymer (I') was 90%.

Table 1

| | Compound | Amount of use (parts) |
|---|---|---|
| (α) | Sodium formaldehyde sulfoxylate | 0.6 |
| | Ferrous sulfate | 0.00012 |
| | EDTA | 0.0003 |
| (β) | MMA | 18.0 |
| | n-BA | 20.0 |
| | St | 2.0 |
| | AMA | 0.4 |
| | 1,3-BD | 0.14 |
| | t-BH | 0.18 |
| | Emulsifier* | 0.75 |
| (χ) | n-BA | 50.0 |
| | St | 10.0 |
| | AMA | 0.4 |
| | 1,3-BD | 0.14 |
| | t-BH | 0.2 |
| | Emulsifier* | 0.6 |
| (δ) | MMA | 57.0 |
| | MA | 3.0 |
| | n-OM | 0.3 |
| | t-BH | 0.06 |
| * Manufactured by TOHO Chemical Industry Co., Ltd., trade name "Phosphanol RS610NA" | | |

(Manufacturing example 3)

(Manufacture of thermoplastic polymer (IV))

To a reactor, 200parts of ion-exchanged water which had been subjected to nitrogen substitution was added, and further one part of "LATEMUL ASK" (trade name) manufactured by Kao Corporation and 0.15 part of potassium persulfate as emulsifiers were added. Subsequently, 40 parts of MMA, 2 parts of n-BA, and 0.004 part of n-OM were added, and stirred at 65˚C for 3 hours under nitrogen atmosphere to complete polymerization. Subsequently, a monomer component composed of 44 parts of MMA and 14 parts of n-BA was dropped into the reactor over the period of 2 hours, and kept for 2 hours to complete polymerization. The resultant polymer latex of the thermoplastic polymer (IV) was added to 0.25% sulfuric acid aqueous solution to separate the polymer out by acid, and the resultant polymer latex was dehydrated, washed by water, and dried to recover a powder thermoplastic polymer (IV). Reduced viscosity of the resultant thermoplastic polymer (IV) was 0.38 L / g.

(Manufacturing example 4)

(Manufacture of acrylic resin film base (A))

To 75 parts of the rubber-containing multistage polymer (I) and 25 parts of the thermoplastic polymer (II) ⟨⟨MMA-MA copolymer (MMA / MA = 99 / 1 (mass ratio), reduced viscosity $\eta$sp / c = 0.06 L / g)⟩⟩, 1.4 parts of TINUVIN234 (trade name) manufactured by Ciba Specialty Chemicals, 0.1 part of ADEKASTAB AO-50 (trade name) manufactured by Adeka Corporation, and 0.3 part of ADEKASTAB LA-67 (trade name) manufactured by Adeka Corporation were added as compounding ingredients, and mixed using henschel mixer. The resultant mixture ⟨⟨acrylic resin composition (III-1)⟩⟩ was supplied to a vent-type extruder (PCM-30 (trade name) manufactured by Ikegai Co.) heated to 230˚C, and kneaded, and extruded while foreign materials were removed with a screen mesh of 300 mesh to obtain a pellet (A).
The pellet (A) prepared by the above-mentioned method was dried at 80˚C for 24 hours, and extruded with a non-vent type screw extruder (L / D = 26) of 40 mm $\phi$ diameter equipped with T-die of 300 mm width under the condition of the cylinder temperature of 180 to 240˚C while foreign materials were removed with a screen mesh of 500 mesh, and then extruded under the conditions of the T-die temperature of 240˚C and the T-die slit width of 0.3 mm into a molten acrylic resin film, which was passed through between two cooled metal rolls and held without any banks (resin pools), and subjected to facial transfer without substantial rolling, and formed into a film of acrylic resin film base (A) having 75 $\mu$m thickness by taking up to a paper tube with a reeler. Pencil hardness of the acrylic resin film base (A) was H.

(Manufacturing example 5)

(Manufacture of acrylic resin film base (B))

To 16 parts of the rubber-containing polymer (I') and 84 parts of the thermoplastic polymer (II) «MMA-MA copolymer (MMA / MA = 90 / 10 (mass ratio), reduced viscosity $\eta$sp / c = 0.06 L / g) » , 1 part of the thermoplastic polymer (IV), 1.4 parts of TINUVIN234 (trade name) manufactured by Ciba Specialty Chemicals, 0.1 part of ADEKASTAB AO-50 (trade name) manufactured by Adeka Corporation, and 0.3 part of ADEKASTAB LA-67 (trade name) manufactured by Adeka Corporation were added as compounding ingredients, and mixed using henschel mixer. The resultant mixture ⟨⟨acrylic resin composition (III-2)⟩⟩ was supplied to a vent-type extruder (PCM-30 (trade name) manufactured by Ikegai Co.) heated to 230˚C, and kneaded, and extruded while foreign materials were removed with a screen mesh of 300 mesh to obtain a pellet (B). The same procedures as in the film forming of the acrylic resin film base (A) were carried out except that the pellet (B) prepared by the above-mentioned method was used, and a film of acrylic resin film base (B) having 75 $\mu$m thickness was formed.
Pencil hardness of the acrylic resin film base (B) was 2H.

(Manufacturing example 6)

(Manufacture of acrylic resin film base (C))

The same procedures as in manufacturing example 5 were carried out except that ⟨⟨MMA-MA copolymer (MMA / MA = 99 / 1 (mass ratio), reduced viscosity $\eta$sp / c = 0.06 L / g) ⟩⟩ was used as the thermoplastic polymer (II), and the film of acrylic resin film base (C) having 75 $\mu$m thickness was formed. Pencil hardness of the acrylic resin film base (C) was 2H.

Example 1

A paint was prepared by dispersing 23 parts of a hydroxyl group-containing acrylic resin (hydroxyl value of 80 mgKOH / g; glass transition temperature of 90˚C; mass average molecular mass of about 80,000) which is a copolymer consisting of 85% of MMA, 12% of HEMA, and 3% of n-BA, 5.6 parts of a trimer of hexamethylenediisocyanate (isocyanurate type) as a polyisocyanate, and 4 parts of silica having indeterminate forms and the mass average particle diameter of 6 to 7 $\mu$m in a solvent composed of 48parts of ethyl acetate, 16 parts of n-propyl acetate, and 10 parts of butyl acetate. This paint was diluted with ethyl acetate and adjusted to have the viscosity of 14 seconds in terms of falling time when measured with Iwata cup viscometer. Subsequently, the resultant viscosity-adjusted paint was coated on one side of the acrylic resin film base (A) having 75 $\mu$m thickness with a gravure coater at the coating speed of 20 m/ min by using an oblique line gravure roll having 200 lines per 25.4 mm (the angle of the oblique lines to the axis direction of the roll being about 45 degrees, the opening width of the engraved pattern being 116 $\mu$m, the bottom width of the engraved pattern being 13 $\mu$m, the depth of the engraved pattern being 33 $\mu$m, the volume of the cell being 16.9 cm$^3$/m$^2$, and the diameter being 120 mm) and a steel doctor blade, and the solvent was evaporated under the atmosphere of 85˚C to obtain a matte acrylic resin film. As the appearance of the resultant matte acrylic resin film, there was no thin spots caused by reduction of the transferred amount or no conspicuous engraved patterns and an excellent matte layer was formed. The resultant matte acrylic resin film was taken up to a paper tube and subjected to aging for 2 days under the atmosphere of 40˚C to cure the matte layer.

Example 2

A paint was prepared by dispersing 32 parts of a hydroxyl group-containing acrylic resin (hydroxyl value of 60 mgKOH / g; glass transition temperature of 65˚C; mass average molecular mass of about 30,000) which is a copolymer consisting of 68% of MMA, 9% of HEMA, 9% of n-BA, and 14% of n-butyl methacrylate, 5.6 parts of a trimer of hexamethylenediisocyanate (isocyanurate type) as a polyisocyanate, and 4.8 parts of silica having indeterminate forms and the mass average particle diameter of 6 to 7 $\mu$m in a solvent composed of 33 parts of ethyl acetate, 15 parts of n-propyl acetate, and 15 parts of butyl acetate. This paint was diluted with ethyl acetate and adjusted to have the viscosity of 14 seconds in terms of falling time when measured with Iwata cup viscometer. The same procedures as in Example 1 were carried out except that the resultant diluted paint was coated on the acrylic resin film base (B). As the appearance of the resultant matte acrylic resin film, there was no thin spots caused by reduction of the transferred amount or no conspicuous engraved patterns and an excellent matte layer was formed.

Example 3

The same procedures as in Example 1 were carried out except that the acrylic resin film base (C) having 75 $\mu$m thickness was used instead of the acrylic resin film base (A).
As the appearance of the resultant matte acrylic resin film, there was no thin spots caused by reduction of the transferred amount or no conspicuous engraved patterns and an excellent matte layer was formed.

Example 4

A paint was prepared by dispersing 27.5 parts of a hydroxyl group-containing acrylic resin (hydroxyl value of 80 mgKOH / g; glass transition temperature of 90˚C; mass average molecular mass of about 80,000) which is a copolymer consisting of 85% of MMA, 12% of HEMA, and 3% of n-BA, 6.8 parts of a trimer of hexamethylenediisocyanate (isocyanurate type) as a polyisocyanate, 6 parts of silica having indeterminate forms and the mass average particle diameter of 5 to 6 $\mu$m, and 1.5 parts of silica having indeterminate forms and the mass average particle diameter of 0.1 $\mu$m and 1 part of polytetrafluoroethylene wax SST-3 (trade name, manufactured by Shamrock Technologies, Inc., melting point of 321 ˚C) having the mass average particle diameter of 5 $\mu$m as a suspension stabilizer in a solvent composed of 22 parts of MEK, 43 parts of MIBK, and 40 parts of butyl acetate. This paint had the viscosity of 18 seconds in terms of falling time when measured right before the coating with Iwata cup viscometer. Subsequently, the paint was coated on one side of the acrylic resin film base (A) having 75 $\mu$m thickness with a gravure coater at the coating speed of 20m / min by using an oblique line gravure roll having 200 lines per 25.4 mm (the angle of the oblique lines to the axis direction of the roll being about 45 degrees, the opening width of the engraved pattern being 116 $\mu$m, the bottom width of the engraved pattern being 13 $\mu$m, the depth of the engraved pattern being 33 $\mu$m, the volume of the cell being 16.9 cm$^3$/m$^2$, and the diameter being 120 mm) and a ceramic doctor blade, and the solvent was evaporated under the atmosphere of 90˚C to obtain a matte acrylic resin film. As the appearance of the resultant matte acrylic resin film, there was no thin spots caused by reduction of the transferred amount or no conspicuous engraved patterns and an excellent matte layer could be formed. The resultant matte acrylic resin film was taken up to a paper tube and subjected to aging for 2 days under the atmosphere of 40˚C to cure the matte layer. The coating was carried out on the acrylic resin film base for about 3,000 m, and during that time, failures in appearance (white streaks being intermittently transferred in the direction of flow) caused by taking up of the precipitated wax by the gravure roll were sometimes observed. Further, after the coating, precipitate was observed at the bottom of a pan which contained the coating liquid.

Example 5

The same procedures as in Example 4 were carried out except that a wax composed of polyethylene and polypropylene having the mass average particle diameter of 5 $\mu$m, namely S-363 (trade name, manufactured by Shamrock Technologies, Inc., melting point of 142˚C), was used instead of polytetrafluoroethylene wax SST-3 (trade name), and a matte acrylic resin film was obtained. The paint in this case had the viscosity of 19 seconds in terms of falling time when measured right before the coating with Iwata cup viscometer. As the appearance of the resultant matte acrylic resin film, there was no thin spots caused by reduction of the transferred amount or no conspicuous engraved patterns and an excellent matte layer could be formed. The coating was carried out on the acrylic resin film base for about 3,000 m, and during that time, failures in appearance caused by taking up of the precipitated wax by the gravure roll were not observed. Further, after the coating, precipitate was not observed at the bottom of a pan which contained the coating liquid.

Example 6

The same procedures as in Example 5 were carried out except that the amount of use of the wax composed of polyethylene and polypropylene, namely S-363 (trade name), was increased to 2 parts, and a matte acrylic resin film was obtained. The paint in this case had the viscosity of 19 seconds in terms of falling time when measured right before the coating with Iwata cup viscometer. As the appearance of the resultant matte acrylic resin film, there was no thin spots caused by reduction of the transferred amount or no conspicuous engraved patterns and an excellent matte layer was formed.

Example 7

The same procedures as in Example 4 were carried out except that polyethylene wax S-395 was not used and a matte acrylic resin film was obtained. The paint in this case had the viscosity of 19 seconds in terms of falling time when measured right before the coating with Iwata cup viscometer. As the appearance of the resultant matte acrylic resin film, there was no thin spots caused by reduction of the transferred amount or no conspicuous engraved patterns and an excellent matte layer could be formed.

Example 8

A paint was prepared by dispersing 27.4 parts of a hydroxyl group-containing acrylic resin (hydroxyl value of 80 mgKOH / g; glass transition temperature of 90˚C; mass average molecular mass of about 80,000) which is a copolymer consisting of 85% of MMA, 12% of HEMA, and 3% of n-BA, 6.8 parts of a trimer of hexamethylenediisocyanate (isocyanurate type) as a polyisocyanate, 7 parts of silica having indeterminate forms and the mass average particle diameter of 5 to 6 $\mu$m, and 1.5 parts of silica having indeterminate forms and the mass average particle diameter of 0.1 $\mu$m and 1 part of a wax composed of polyethylene and polypropylene having the mass average particle diameter of 5 $\mu$m, namely S-363 (trade name, manufactured by Shamrock Technologies, Inc., melting point of 142˚C), as a suspending agent in a solvent composed of 22.3 parts of MEK, 49.6 parts of MIBK, and 45.8 parts of butyl acetate. This paint had the viscosity of 15 seconds in terms of falling time when measured right before the coating with Iwata cup viscometer. Subsequently, the paint was coated on one side of the acrylic resin film base (A) having 75 $\mu$m thickness with a gravure coater at the coating speed of 30m / min by using an oblique line gravure roll having 200 lines per inch (the angle of the oblique lines to the axis direction of the roll being about 45 degrees, the opening width of the engraved pattern being 116 $\mu$m, the bottom width of the engraved pattern being 13 $\mu$m, the depth of the engraved pattern being 33 $\mu$m, the volume of the cell being 16.9 cm$^3$ / m$^2$, and the diameter being 120 mm) and a ceramic doctor blade, and the solvent was evaporated under the atmosphere of 80˚C to obtain a matte acrylic resin film. As the appearance of the resultant matte acrylic resin film, there was no thin spots caused by reduction of the transferred amount or no conspicuous engraved patterns and an excellent matte layer could be formed. The resultant matte acrylic resin film was taken up to a paper tube and subjected to aging for 2 days under the atmosphere of 40˚C to cure the matte layer. The thickness of the matte layer was 1 $\mu$m. Further, the resultant matte acrylic resin film had reflection of the light of a fluorescent lamp and had excellent appearance without any conspicuous engraved patterns.

Example 9

The same procedures as in Example 8 were carried out except that an oblique line gravure roll having 250 lines per 25.4 mm (the angle of the oblique lines to the axis direction of the roll being about 45 degrees, the opening width of the engraved pattern being 80 $\mu$m, the bottom width of the engraved pattern being 11 $\mu$m, the depth of the engraved pattern being 35 $\mu$m, the volume of the cell being 15.6 cm$^3$ / m$^2$, and the diameter being 120 mm) was used instead of the oblique line gravure roll having 200 lines per 25.4 mm and the coating speed of 40m / min was applied. The thickness of the matte layer was 1 $\mu$m. Further, the resultant matte acrylic resin film had reflection of the light of a fluorescent lamp and had excellent appearance without any conspicuous engraved patterns.

Example 10

The same procedures as in Example 8 were carried out except that an Rotofulo lattice gravure roll having 250 lines per 25.4 mm (the depth of the engraved pattern being 34 $\mu$m, the volume of the cell being 13.2 cm$^3$ / m$^2$, and the diameter being 120 mm) was used instead of the oblique line gravure roll having 200 lines per 25.4 mm. The thickness of the matte layer was 1 $\mu$m. Further, the resultant matte acrylic resin film had reflection of the light of a fluorescent lamp and had excellent appearance without any conspicuous engraved patterns.

(Reference Example 1)

The same procedures as in Example 8 were carried out except that an oblique line gravure roll having 250 lines per 25.4 mm (the angle of the oblique lines to the axis direction of the roll being about 75 degrees, the opening width of the engraved pattern being 90 $\mu$m, the bottom width of the engraved pattern being 8 $\mu$m, the depth of the engraved pattern being 32 $\mu$m, the volume of the cell being 15.4 cm$^3$ / m$^2$, and the diameter being 120 mm) was used instead of the oblique line gravure roll having 200 lines per 25.4 mm. Surface gloss of the resultant matte acrylic resin film was 19.4%, which meant the matte acrylic resin film had an excellent flatting, however, some portions of which were not coated with the paint and a matte acrylic resin film having homogeneously coated surface could not be obtained.
The results of the evaluation of the acrylic resin film base, the matte acrylic resin film, and the laminated product of these examples are collectively shown in Table 2.

Table 2

| | Heat shrinkage factor (%) MD | TD | Matt layer thickness (μm) | Pencil hardness | Surface gloss (%) | Yellowing (%) YI'(200°C)-YI | YI'(250°C)-YI | Molding condition | Convex part Crack | Whitening | Corner Crack | Whitening | Dynamic coefficient of friction | Anti-scratch property Condition 1 | 2 | Resistance to aromatic | Appearance | Appearance (yellowing) |
|---|---|---|---|---|---|---|---|---|---|---|---|---|---|---|---|---|---|---|
| Ex. 1 | 11.8 | 2.5 | 1.1 | H | 21 | 0.1 | -0.1 | Insert | ○ | ○ | ○ | ○ | 0.24 | × | ◎ | ○ | ○ | ○ |
| | | | | | | | | In-mold | ○ | ○ | ○ | ○ | | × | ◎ | ○ | ○ | ○ |
| Ex. 2 | 11.5 | 23 | 1.3 | 2H | 26 | 0.1 | -0.1 | Insert | ○ | × | ○ | × | 0.27 | × | ◎ | ○ | ○ | ○ |
| | | | | | | | | In-mold | ○ | × | ○ | × | | × | ◎ | ○ | ○ | ○ |
| Ex. 3 | 11.5 | 2.3 | 1.0 | 3H | 24 | 0.1 | -0.1 | Insert | ○ | × | ○ | × | 0.24 | × | ◎ | ○ | ○ | ○ |
| | | | | | | | | In-mold | ○ | × | ○ | × | | × | ◎ | ○ | ○ | ○ |
| Ex. 4 | 11.8 | 2.5 | 1 | H | 33 | -0.3 | -0.1 | Insert | ○ | ○ | ○ | ○ | 0.22 | ○ | ◎ | ○ | ○ | ○ |
| | | | | | | | | In-mold | ○ | ○ | ○ | ○ | | ○ | ◎ | ○ | ○ | ○ |
| Ex. 5 | 11.8 | 2.5 | 1 | H | 29 | -0.3 | 0 | Insert | ○ | ○ | ○ | ○ | 0.23 | ○ | ◎ | ○ | ○ | ○ |
| | | | | | | | | In-mold | ○ | ○ | ○ | ○ | | ○ | ◎ | ○ | ○ | ○ |
| Ex. 6 | 11.8 | 2.5 | 1 | H | 26 | -0.3 | -0.2 | Insert | ○ | ○ | ○ | ○ | 0.21 | ◎ | ◎ | ○ | ○ | ○ |
| | | | | | | | | In-mold | ○ | ○ | ○ | ○ | | ◎ | ○ | ○ | ○ | ○ |
| Ex. 7 | 11.8 | 2.5 | 1 | H | 36 | 0.1 | -0.1 | Insert | ○ | ○ | ○ | ○ | 0.28 | × | ◎ | ○ | ○ | ○ |
| | | | | | | | | In-mold | ○ | ○ | ○ | ○ | | × | ◎ | ○ | ○ | ○ |
| Ex. 8 | 11.8 | 2.5 | I | H | 14 | 0.1 | -0.1 | Insert | ○ | ○ | ○ | ○ | 0.23 | ○ | ◎ | ○ | ○ | ○ |
| | | | | | | | | In-mold | ○ | ○ | ○ | ○ | | ○ | ◎ | ○ | ○ | ○ |
| Ex. 9 | 11.8 | 2.5 | 1 | H | 14 | 0.1 | -0.1 | Insert | ○ | ○ | ○ | ○ | 0.23 | ○ | ◎ | ○ | ○ | ○ |
| | | | | | | | | In-mold | ○ | ○ | ○ | ○ | | ○ | ◎ | ○ | ○ | ○ |
| Ex. 10 | 11.8 | 2.5 | 0.8 | H | 19 | 0.1 | -0.1 | insert | ○ | ○ | ○ | ○ | 0.22 | ○ | ◎ | ○ | × | ○ |
| | | | | | | | | In-mold | ○ | ○ | ○ | ○ | | ○ | ◎ | ○ | × | ○ |

EP 1 803 553 B1

From Examples 1 to 10, it is found that the matte acrylic resin film which is subjected to coating of the thickness in the range of 0.1 to 5 $\mu$m realizes excellent moldability without generating cracks in the matte layer. Further, excellent chemical resistance is realized by using a curable binder resin. Further, it is found that the matte acrylic resin film does not show any changes in appearance when the difference between the yellowing factor of the matte acrylic resin film measured after it is heated to 200˚C (YI' (200˚C)) and one measured before it is heated (YI) is 1.3 or less. From Examples 4 to 6, and 8 to 10, it is found that the matte acrylic resin film which is added with wax realizes excellent anti-scratch property.

From Examples 4 to 6, and 8 to 10, it is found that the laminated product which is laminated with the matte acrylic resin film and which has dynamic coefficient of friction of 0.23 or less realizes excellent anti-scratch property.

From Examples 8 to 10 and Reference Example 1, it is found that a film which has excellent appearance and which does not exhibit any change in the appearance in the case of thermoforming can be obtained when an oblique line gravure roll which has 150 lines per 25.4 mm or more and which has oblique lines engraved at an angle of 40 to 50 degrees to the axis direction of the roll is used.

As mentioned above, by using the matte acrylic resin film having the constitution of the present invention which can realize design characteristics that is difficult to realize in the conventional case where a matting agent is added to an acrylic resin film layer and excellent handleability, the matte layer of which does not generate cracks even in the case of deep drawing of insert molding or in-mold decorating, and which has anti-scratch property, surface hardness, heat resistance, chemical resistance, resistance to yellowing by heat, and flatting that can be used for vehicles, and the laminated product formed by laminating the matte acrylic resin film on a substrate can be provided. Further, it is possible to stably produce the matte acrylic resin film by adopting the producing method of the present invention.

INDUSTRIAL APPLICABILITY

The laminated product having the matte acrylic resin film of the present invention is particularly suitable for parts for vehicles and building materials. As concrete examples, it is suitably used for interior of vehicles such as instrument panel, console box, meter cover, door lock bezel, steering wheel, power window switch base, center cluster, and dash-board; exterior of vehicles such as weather strip, bumper, bumper guard, side mad guard, body panel, spoiler, front grill, strut mount, wheel cap, center pillar, door mirror, center ornament, side mole, door mole, window mole, window, headlamp cover, tail lamp cover, and parts for windshield; front panel, button, emblem, and surface facing materials of auto visual system and furniture goods; housing, display window, and button of mobile phone and the like; covering material for furniture; building interior material such as wall, ceiling, and floor; building exterior material such as outer wall like siding, fence, roof, gate, and gable board; surface decorative panel of furniture such as window frame, door, handrail, door sill, and door-head; optical parts such as various displays, lens, mirror, goggle, and window glass; interior parts of various vehicles other than automobiles such as trains, air planes, and ships; various packaging containers and materials such as bottles, cosmetic containers, and smalls containers; and various miscellaneous uses like sundry goods such as gifts and smalls.

**Claims**

1.  A matte acrylic resin film for thermoforming, comprising:

    an acrylic resin film base; and
    a matte layer of 0.1 $\mu$m or more and less than 2 $\mu$m thickness containing a matting agent and a curable binder resin, the matte layer being formed on one surface of the acrylic resin film base as the outermost layer.

2.  The matte acrylic resin film for thermoforming of claim 1, the matte layer further containing a polyolefin wax.

3.  The matte acrylic resin film for thermoforming of claim 1, further comprising a design layer on the opposite side of the matte layer of the acrylic resin film base.

4.  A method for producing a matte acrylic resin film for thermoforming, comprising the step of forming a matte layer of 0.1 $\mu$m or more and less than 2 $\mu$m thickness containing a matting agent and a curable binder resin on an acrylic resin film base by printing method or coating method.

5.  The method for producing a matte acrylic resin film for thermoforming of claim 4, wherein the matte layer is formed by using an oblique line roll having oblique lines engraved with the interval of 150 lines or more per 25.4 mm at the angle of 40 to 50 degrees to the roll axis direction.

6. A laminated product, comprising the matte acrylic resin film for thermoforming of claim 1 and a substrate, the substrate being in contact with the surface of the matte acrylic resin film for thermoforming on the opposite side of the matte layer.

7. The laminated product of claim 6, wherein dynamic coefficient of friction of the matte layer is 0.23 or less.

8. The laminated product of claim 6, wherein the matte acrylic resin film for thermoforming is laminated on the substrate by using in-mold decorating or insert molding.

**Patentansprüche**

1. Matter Acrylharzfilm für das Thermoformen, umfassend:

   eine Acrylharzfilmgrundlage; und
   eine matte Schicht einer Dicke von 0,1 $\mu$m oder mehr und weniger als 2 $\mu$m,
   enthaltend ein Mattierungsmittel und ein härtbares Binderharz, wobei die matte Schicht auf einer Oberfläche der Acrylharzfilmgrundlage als äußerste Schicht gebildet ist.

2. Matter Acrylharzfilm für das Thermoformen nach Anspruch 1, wobei die matte Schicht weiterhin ein Polyolefinwachs enthält.

3. Matter Acrylharzfilm für das Thermoformen nach Anspruch 1, umfassend weiterhin eine Gestaltungsschicht auf der gegenüberliegenden Seite der matten Schicht der Acrylharzfilmgrundlage.

4. Verfahren zur Herstellung eines matten Acrylharzfilms für das Thermoformen, umfassend den Schritt des Ausbildens einer matten Schicht einer Dicke von 0,1 $\mu$m oder mehr und weniger als 2 $\mu$m, enthalten ein Mattierungsmittel und ein härtbares Binderharz, auf einer Acrylharzfilmgrundlage durch ein Druckverfahren oder Beschichtungsverfahren.

5. Verfahren zur Herstellung eines matten Acrylharzfilms für das Thermoformen nach Anspruch 4, wobei die matte Schicht gebildet wird durch Verwendung einer Schräglinien-Walze, bei der Schräglinien mit dem Intervall von 150 Linien oder mehr pro 25,4 mm in einem Winkel von 40 bis 50 Grad zu der Walzachsenrichtung eingraviert sind.

6. Laminiertes Produkt, umfassend den matten Acrylharzfilm für das Thermoformen nach Anspruch 1 und ein Substrat, wobei das Substrat mit der Oberfläche des matten Acrylharzfilms für das Thermoformen auf der der matten Schicht gegenüberliegenden Seite in Berührung steht.

7. Laminiertes Produkt nach Anspruch 6, wobei der dynamische Reibungskoeffizient der matten Schicht 0,23 oder weniger beträgt.

8. Laminiertes Produkt nach Anspruch 6, wobei der matte Acrylharzfilm für das Thermoformen auf das Substrat laminiert ist durch Anwendung von Dekoration in Werkzeug oder Einlege-Formgebung.

**Revendications**

1. Film de résine acrylique mat pour thermoformage, comprenant :

   un support de film de résine acrylique ; et
   une couche mate d'une épaisseur supérieure ou égale à 0,1 $\mu$m et inférieure à 2 $\mu$m contenant un agent matifiant et une résine liante durcissable, la couche mate étant formée sur une surface du support de film de résine acrylique sous forme de couche la plus à l'extérieur.

2. Film de résine acrylique mat pour thermoformage selon la revendication 1, la couche mate contenant en outre une cire de polyoléfine.

3. Film de résine acrylique mat pour thermoformage selon la revendication 1, comprenant en outre une couche de dessin sur le côté opposé à la couche mate du support de film de résine acrylique.

**4.** Procédé de production d'un film de résine acrylique mat pour thermoformage, comprenant l'étape de formation d'une couche mate d'une épaisseur supérieure ou égale à 0,1 $\mu$m et inférieure à 2 $\mu$m contenant un agent matifiant et une résine liante durcissable sur un support de film de résine acrylique par un procédé d'impression ou un procédé de revêtement.

**5.** Procédé de production d'un film de résine acrylique mat pour thermoformage selon la revendication 4, dans lequel la couche mate est formée en utilisant un rouleau à lignes obliques ayant des lignes obliques gravées avec l'intervalle de 150 lignes ou plus pour 25,4 mm avec un angle de 40 à 50˚ par rapport au sens de l'axe du rouleau.

**6.** Produit stratifié, comprenant le film de résine acrylique mat pour thermoformage selon la revendication 1 et un substrat, le substrat étant en contact avec la surface du film de résine acrylique mat pour thermoformage sur le côté opposé à la couche mate.

**7.** Produit stratifié selon la revendication 6, dans lequel le coefficient de friction dynamique de la couche mate est inférieur ou égal à 0,23.

**8.** Produit stratifié selon la revendication 6, dans lequel le film de résine acrylique mat pour thermoformage est stratifié sur le substrat en utilisant une décoration dans le moule (IMD : in-mold decorating, en anglais) ou par moulage d'insert.

**EP 1 803 553 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002361712 A
- JP 2003211598 A
- JP HEI1034703 B
- JP 2132254 A
- JP HEI8323934 B
- JP HEI11147237 B
- JP 2002080678 A
- JP 2002080679 A
- JP 2005097351 A
- JP 2005163003 A
- JP 2005139416 A
- JP 2808251 B
- JP 9028950 A

### Non-patent literature cited in the description

- **J. BRANDRUP.** Polymer Handbook. Interscience, 1989